# EUROPEAN PATENT SPECIFICATION

(11) **EP 4 446 591 B1**
(45) Date of publication and mention of the grant of the patent: **25.02.2026**
(21) Application number: 22903285.9
(22) Date of filing: 01.12.2022
(51) Int. Cl.: F04C 18/344, F04C 18/356, F04C 29/00, F01C 17/06, F25B 31/02

(54) **FLUID MACHINERY, HEAT EXCHANGE APPARATUS, AND OPERATION METHOD FOR FLUID MACHINERY**
STRÖMUNGSMASCHINE, WÄRMETAUSCHERVORRICHTUNG UND BETRIEBSVERFAHREN FÜR STRÖMUNGSMASCHINE
MACHINE À FLUIDE, APPAREIL D'ÉCHANGE DE CHALEUR, ET PROCÉDÉ DE FONCTIONNEMENT POUR MACHINE À FLUIDE

(30) Priority: 07.12.2021 CN 202111487159
(43) Date of publication of application: 16.10.2024
(73) Proprietor: Gree Electric Appliances, Inc. of Zhuhai, Zhuhai, Guangdong 519070 (CN)
(72) Inventor: DU, Zhongcheng, Zhuhai, Guangdong 519070 (CN); REN, Liping, Zhuhai, Guangdong 519070 (CN); ZHANG, Peilin, Zhuhai, Guangdong 519070 (CN); LI, Zhi, Zhuhai, Guangdong 519070 (CN); SONG, Xuewei, Zhuhai, Guangdong 519070 (CN); YU, Ruibo, Zhuhai, Guangdong 519070 (CN)
(74) Representative: Murgitroyd & Company
(86) International application number: PCT/CN2022/135779
(87) International publication number: WO 2023/103863

(56) References cited:
- CN-A- 101 644 325
- CN-A- 113 202 761
- CN-U- 204 877 938
- CN-U- 208 816 337
- GB-A- 1 446 286
- JP-A- 2005 139 976
- JP-A- H09 195 956
- JP-A- S59 145 379

## Description

### TECHNICAL FIELD

The present invention relates to the technical field of heat exchange system, and in particular, to fluid machinery, a heat exchange apparatus, and an operation method for fluid machinery.

### BACKGROUND

In some related technologies, fluid machinery includes a compressor and an expansion machine, and so on. Taking the compressor as an example, according to an energy saving and environment protection policy and a comfort requirement of a customer for air conditioner, air conditioner industry is always pursuing high efficiency and low noise. As a core of the air conditioner, the compressor directly affects a level of power efficiency and noise of the air conditioner. A rolling rotor type compressor, as a mainstream compressor of a household air conditioner, development of its technology has been relatively mature at present. Limited by a structural principle, its optimization space is limited. If a major breakthrough is to be obtained, innovation needs to be performed from the structural principle.

Therefore, it is necessary to provide fluid machinery, such as a compressor or an expansion machine, which has characteristics of high energy efficiency and low noise and the like.

JPS59145379A discloses a reciprocating piston compressor, which is provided with an input shaft, and two eccentric wheels are arranged on the input shaft. Protruding parts of the two eccentric wheels relative to the input shaft are staggered by 180°, and eccentric amounts of the two eccentric wheels relative to a rotation center of the input shaft are s respectively. The two eccentric wheels are rotatably arranged in holes of two pistons respectively. The cylinder is provided with two orthogonal holes, and the two pistons are respectively arranged in the two orthogonal holes. The rotation center of the cylinder and the rotation center of the input shaft are eccentrically arranged. Therefore, the technical problems that a crank mechanism of a traditional compressor has a complex structure, the large number of parts and a large volume are solved.

### SUMMARY

According to an aspect of the present invention, there is provided fluid machinery including a crankshaft, a cylinder sleeve, a crossed groove structure and sliding blocks, where the crankshaft is provided with two eccentric parts along an axial direction of the crankshaft, there is a phase difference of a first included angle A between the two eccentric parts, and eccentric amounts of the two eccentric parts are unequal. The crankshaft and the cylinder sleeve are eccentrically arranged and have a fixed eccentric distance therebetween. The crossed groove structure is rotationally arranged in the cylinder sleeve and provided with two limiting channels, and the two limiting channels are sequentially arranged along the axial direction of the crankshaft. Extension directions of the two limiting channels are perpendicular to the axial direction of the crankshaft, and there is a phase difference of a second included angle B between the extension directions of the two limiting channels, where the first included angle A is twice of the second included angle B. The sliding blocks have through holes, and the number of the sliding blocks is two. The two eccentric parts correspondingly extends into the two through holes of the two sliding blocks. The two sliding blocks are correspondingly arranged in the two limiting channels in a sliding manner, to form a volume-variable cavity. The volume-variable cavity is located at a sliding direction of the sliding block. The crankshaft is rotated, to drive the sliding blocks to slide back and forth in the limiting channel while interacting with the crossed groove structure, so that the crossed groove structure and the sliding block are rotated in the cylinder sleeve. A shaft body portion of the crankshaft includes a first section connected and a second section which are connected along the axial direction thereof. The first section and the second section are non-coaxially arranged and are movably connected. The two eccentric portions are respectively arranged at the first section and the second section.

In some embodiments, the crankshaft further includes a sliding connection member. The first section is movably connected to the second section via the sliding connection member. The sliding connection member slides relative to the first section while the first section is rotated, and the sliding connection member slides relative to the second section while the second section is rotated.

In some embodiments, the sliding connection member has two limiting sliding slots. Extension directions of the two limiting sliding slots are perpendicular to each other and are perpendicular to the axial direction of the crankshaft. The first section has a first protrusion structure at an end part of a side towards the sliding connection member. The second section has a second protrusion structure at an end part of a side towards the sliding connection member. The first protrusion structure and the second protrusion structure are arranged in the two limiting sliding slots in a sliding manner, respectively. The first section is rotated, to make the first protrusion structure slide back and forth in the corresponding limiting sliding slot and interact with the sliding connection member simultaneously, so that the sliding connection member is rotated and, drives the second protrusion structure to slide back and forth in the corresponding limiting sliding slot while driving the second section to rotate. Or, the second section is rotated, to make the second protrusion structure slide back and forth in the corresponding limiting sliding slot and interact with the sliding connection member simultaneously, so that the sliding connection member is rotated and, drives the first protrusion structure to slide back and forth in the corresponding limiting sliding slot while driving the first section to rotate.

In some embodiments, the sliding connection member has two limiting protrusions extending towards the first section and the second section respectively. The first section has a first sliding slot structure at an end part of a side towards the sliding connection member. The second section has a second sliding slot structure at an end part of a side towards the sliding connection member. The two limiting protrusions are respectively arranged in the first sliding slot structure and the second sliding slot structure slidably, and an extension direction of the first sliding slot structure is perpendicular to an extension direction of the second sliding slot structure. The first section is rotated, to make the corresponding limiting protrusion slide back and forth in the first sliding slot structure and the first sliding slot structure simultaneously interact with the sliding connection member, so that the sliding connection member is rotated and, drives the limiting protrusion to slide back and forth in the second sliding slot structure while driving the second section to rotate. Or, the second section is rotated, to make the corresponding limiting protrusion slide back and forth in the second sliding slot structure and the second sliding slot structure simultaneously interact with the sliding connection member, so that the sliding connection member is rotated and, drives the limiting protrusion to slide back and forth in the first sliding slot structure while driving the first section to rotate.

In some embodiments, an assembly eccentric amount, between the first section and the cylinder sleeve, is equal to the eccentric amount of the eccentric part arranged at the first section, and an assembly eccentric amount, between the second section and the cylinder sleeve, is equal to the eccentric amount the eccentric parts arranged at the second section.

In some embodiments, two ends of the limiting channel penetrate to a peripheral surface of the crossed groove structure.

In some embodiments, the two sliding blocks are concentrically arranged with the two eccentric parts respectively. The two sliding blocks perform a circular motion around the axis of the crankshaft. There is a first rotating gap between a hole wall of the through hole and the eccentric part, and the first rotating gap ranges from 0.005 mm to 0.05 mm.

In some embodiments, the crossed groove structure and the cylinder sleeve are coaxially arranged, there is a second rotating gap between a peripheral surface of the crossed groove structure and an inner wall surface of the cylinder sleeve, and the second rotating gap ranges from 0.005 mm to 0.1 mm.

In some embodiments, the first included angle A ranges from 160 degrees to 200 degrees, and the second included angle B ranges from 80 degrees to 100 degrees.

In some embodiments, the fluid machinery further includes a flange arranged at an end of the axial direction of the cylinder sleeve, and the crankshaft and the flange are concentrically arranged.

In some embodiments, there is a first assemble gap between the crankshaft and the flange, and the first assemble gap ranges from 0.005 mm to 0.05 mm.

In some embodiments, the first assemble gap ranges from 0.01 mm to 0.03 mm.

In some embodiments, the eccentric part has an arc surface, and a central angle of the arc surface is larger than or equal to 180 degrees.

In some embodiments, the eccentric part is cylindrical.

In some embodiments, a proximal end of the eccentric part is flush with an outer circle of a shaft body portion of the crankshaft; or, a proximal end of the eccentric part is protruded from an outer circle of the shaft body portion of the crankshaft; or, a proximal end of the eccentric portion is provided at an inner side of an outer circle of a shaft body portion of the crankshaft.

In some embodiments, the sliding block includes a plurality of sub-sliding blocks which are spliced to form the through hole.

In some embodiments, the two eccentric parts are arranged at intervals in the axial direction of the crankshaft.

In some embodiments, the crossed groove structure has a central hole, the two limiting channels communicates with each other via the central hole, and an aperture of the central hole is larger than a diameter of a shaft body portion.

In some embodiments, the aperture of the central hole is larger than a diameter of the eccentric part.

In some embodiments, a projection of the sliding block in the axial direction of the through hole has two relatively parallel straight-line segments and arc segments connecting the ends of the two straight line segments.

In some embodiments, the limiting channel has a set of first sliding surfaces arranged opposite to each other and in a sliding contact with the sliding block. The sliding block has a second sliding surface matched with the first sliding surface and a pressing surface towards ends of the limiting channel, and the pressing surface serves as a head of the sliding block. The two second sliding surfaces are connected via the pressing surface, and the pressing surface faces to the volume-variable cavity.

In some embodiments, the pressing surface is an arc surface. A distance, between an arc center of the arc surface and a center of the through hole, is equal to the eccentric amount of the eccentric part.

In some embodiments, a curvature radius of the arc surface is equal to a radius of an inner circle of the cylinder sleeve; or, there is a difference value between a curvature radius of the arc surface and a radius of the inner circle of the cylinder sleeve, and the difference value ranges from -0.05 mm to 0.025 mm.

In some embodiments, the difference value ranges from -0.02 mm to 0.02 mm

In some embodiments, a ratio, between a projection *S_{sliding block},* in the sliding direction of the sliding block, of the pressing surface and, an area *S*_{*exhaus*t} of a compression exhaust port of the cylinder sleeve, is *S*_{*sliding bloc*k}/*Sₑₓₕₐᵤₛₜ,* which ranges from 8 to 25.

In some embodiments, the ratio *S*_{*sliding bloc*k}/*Sₑₓₕₐᵤₛₜ* ranges from 12 to 18.

In some embodiments, the cylinder sleeve has a compression intake port and a compression exhaust port. In the case that any of the sliding blocks is at an intake position, the compression intake port communicates with the corresponding volume-variable cavity. In the case that any of the sliding blocks is at an exhaust position, the corresponding volume-variable cavity communicates with the compression exhaust port.

In some embodiments, an inner wall surface of the cylinder sleeve has an air-suction cavity communicating with the compression intake port.

In some embodiments, the air-suction cavity extends a first preset distance around a circumference of the inner wall surface of the cylinder sleeve, to form an arc-shaped air suction cavity.

In some embodiments, there are two air-suction cavities, the two air-suction cavities are arranged at intervals along the axial direction of the cylinder sleeve. The cylinder sleeve further has an air-suction communicating cavity. The two air-suction cavities both communicates with the air-suction communicating cavity, and the compression intake port communicates with the air-suction cavity via the air-suction communicating cavity.

In some embodiments, the air-suction communicating cavity extends a second preset distance along the axial direction of the cylinder sleeve. At least one end of the air-suction communicating cavity penetrates through an axial end surface of the cylinder sleeve.

In some embodiments, an outer wall of the cylinder sleeve is provided with an exhaust cavity. The compression exhaust port communicates with the exhaust cavity via an inner wall of the cylinder sleeve. The fluid machinery further includes an exhaust valve assembly arranged in the exhaust cavity and corresponding to the compression intake port.

In some embodiments, there are two compression exhaust ports, and the two compression exhaust ports are arranged at intervals along the axial direction of the cylinder sleeve. There are two exhaust valve assemblies, and the two exhaust valve assemblies are arranged corresponding to the two compression exhaust ports, respectively.

In some embodiments, an axial end surface of the cylinder sleeve is further provided with a communicating hole communicating to the exhaust cavity. The fluid machinery further includes a flange provided with an exhaust channel. The communicating hole communicates with the exhaust channel.

In some embodiments, the exhaust cavity penetrates to an outer wall surface of the cylinder sleeve. The fluid machinery further includes an exhaust cover plate connected to the cylinder sleeve and seals the exhaust cavity.

In some embodiments, the fluid machinery is a compressor.

In some embodiments, the cylinder sleeve has an expansion intake port and an expansion exhaust port. In the case that any of the sliding blocks is at an intake position, the expansion exhaust port communicates with the corresponding volume-variable cavity. In the case that any of the sliding blocks is at an exhaust position, the corresponding volume-variable cavity communicates with the expansion intake port.

In some embodiments, an inner wall surface of the cylinder sleeve has an expansion exhaust cavity communicating with the expansion exhaust port.

In some embodiments, the expansion exhaust cavity extends a first preset distance around a circumference of the inner wall surface of the cylinder sleeve to form an arc-shaped expansion exhaust cavity, and the expansion exhaust cavity extends from the expansion exhaust port to a side where the expansion intake port is located. An extension direction of the expansion exhaust cavity is the same as a rotation direction of the crossed groove structure.

In some embodiments, there are two expansion exhaust cavities, and the two expansion exhaust cavities are arranged at intervals along the axial direction of the cylinder sleeve. The cylinder sleeve further has an expansion exhaust communicating cavity, the two expansion exhaust cavities both communicate with the expansion exhaust communicating cavity. The expansion exhaust port communicates with the expansion exhaust cavity via the expansion exhaust communicating cavity.

In some embodiments, the expansion exhaust communicating cavity extends a second preset distance along the axial direction of the cylinder sleeve. At least one end of the expansion exhaust communicating cavity penetrates through an axial end surface of the cylinder sleeve.

In some embodiments, the fluid machinery is an expansion machine.

According to another aspect of the present invention, a heat exchange apparatus including the fluid machinery above-mentioned is provided.

According to another aspect of the present invention, an operation method for fluid machinery is provided. The operation method including: performing, by a first section of the crankshaft, rotation, around an axis *O*₀ of the first section, and performing, by a second section of the crankshaft, rotation, around an axis *O*₀' of the second section, where the *O*₀ and the *O*₀' do not coincide; the axis *O*₀ of the first section and an axis *O*₁ of the crossed groove structure being eccentrically arranged and having a fixed eccentric distance therebetween, and the axis *O*₀' of the second section and the axis *O*₁ of the crossed groove structure being eccentrically arranged and having a fixed eccentric distance therebetween; taking the axis *O*₀ of the first section as a center of a circle and, performing, by a first sliding block, a circular motion, a distance, between a center *O*₃ of the first sliding block and the axis *O*₀ of the first section, being equal to the eccentric amount of the eccentric part at the first section, the eccentric amount of the eccentric part at the first section being equal to the eccentric distance between the axis *O*₀ of the first section and the axis *O*₁ of the crossed groove, the crankshaft being rotated, to drive the first sliding block to perform the circular motion, and the first sliding block interacting with the crossed groove structure and sliding back and forth in the limiting channel of the crossed groove structure; and taking the axis *O*₀' of the second section as a center of a circle and, performing, by a second sliding block, a circular motion, a distance, between a center *O₄* of the second sliding block and the axis *O*₀' of the second section, being equal to the eccentric amount of the eccentric part at the second section, the eccentric amount at the second section being equal to an eccentric distance between the axis *O*₀' of the second section and the axis *O*₁ of the crossed groove, the crankshaft being rotated, to drive the second sliding block to perform the circular motion, and the second sliding block interacting with the crossed groove structure and sliding back and forth in the limiting channel of the crossed groove structure.

In some embodiments, the operation method adopts a mechanism principle of a cross-shaped sliding block, the eccentric part of the first section serves as a first connecting rod L₁, the eccentric part of the second section serves as a second connecting rod L₂, and the two limiting channels of the crossed groove structure respectively serve as a third connecting rod L₃ and a fourth connecting rod L₄, where a length of the first connecting rod L₁ is not equal to a length of the second connecting rod L₂.

In some embodiments, there is a first included angle A between the first connecting rod L₁ and the second connecting rod L₂, and there is a second included angle B between the third connecting rod L₃ and the fourth connecting rod L₄, where the first included angle A is twice of the second included angle B.

In some embodiments, a connecting line, among the axis *O*₀ of the first section, the axis *O*₀' of the second section and the axis *O*₁ of the crossed groove, is *O*₀*O*₀'*O*₁. There is a third included angle C between the first connecting rod L₁ and the connecting line *O*₀*O*₀'*O*₁, and correspondingly, there is a fourth included angle D between the third connecting rod L₃ and the connecting line *O*₀*O*₀'*O*₁. The third included angle C is twice of the fourth included angle D. There is a fifth included angle E between the second connecting rod L₂ and the connecting line *O*₀*O*₀'*O*₁, and correspondingly, there is a sixth included angle F between the fourth connecting rod L₄ and the connecting line *O*₀*O*₀'*O*₁. The fifth included angle E is twice of the sixth included angle F. A sum of the third included angle C and the fifth included angle E is the first included angle A, and a sum of the fourth included angle D and the sixth included angle F is the second included angle B.

In some embodiments, the operation method further includes: an angular velocity of the rotation of the sliding block is equal to an angular velocity of the revolution of the sliding block, and an angular velocity of the revolution of the crossed groove structure is equal to the angular velocity of the rotation of the sliding block.

In some embodiments, during a rotating process of the crankshaft, the crankshaft is rotated two circles, to implement four times of air suction and exhaust process.

According to technical solutions of the present invention, the crossed groove structure is designed to be a structure provided with two limiting channels, and correspondingly, two sliding blocks are provided. The two eccentric parts of the crankshaft are correspondingly extended into the two through holes of the two sliding blocks, meanwhile, the two sliding blocks are correspondingly arranged in the two limiting channels in a sliding manner, so that a volume-variable cavity is formed. The first included angle A between the two eccentric parts is twice of the second included angle B between the extension directions of the two limiting channels, in the case that one of the two sliding blocks is at a dead point position, that is, driving torque, of the eccentric part corresponding to the sliding block at the dead point position, is zero, so that the sliding block at the dead point position cannot continue rotating. At this point, driving torque, of the sliding block corresponding to the other of the two eccentric parts, is the maximum value, to ensure that the eccentric part with the maximum driving torque may normally drive the corresponding sliding block to rotate, so that the crossed groove structure is driven to rotate by this sliding block, and thus the sliding block at the dead point position is driven to continue to rotate by the crossed groove structure, so that a stable operation of the fluid machinery is achieved, and the dead point position of the motion mechanism is avoided, and thus motion reliability of the fluid machinery is improved.

Moreover, the fluid machinery provided by the present discourse is capable to be stably operated, that is, energy efficiency of the fluid machinery, such as a compressor and an expansion machine is improved, and noise is reduced, so that operation reliability of the heat exchange apparatus is ensured.

### BRIEF DESCRIPTION OF THE DRAWINGS

The drawings described herein are used to provide a further understanding of the present invention, and constitute a part of the present invention. The illustrative embodiments of the present invention and the description thereof are used to explain the present invention, and do not constitute an improper limitation on the present invention. In the drawings:
FIG. 1 show a schematic diagram of a mechanism principle about an operation of a compressor according to some embodiments of the present invention.
FIG. 2 shows a schematic diagram of the mechanism principle about the operation of the compressor in FIG. 1.
FIG. 3 shows a schematic diagram of an internal structure of a compressor according to a first embodiment of the present invention.
FIG. 4 shows a schematic structural diagram of a pump body assembly of the compressor in FIG. 3.
FIG. 5 shows a schematic exploded structural diagram of the pump body assembly in FIG. 4.
FIG. 6 shows a schematic diagram of an assembly structure of a crankshaft, a crossed groove structure and a sliding block in FIG. 5.
FIG. 7 shows a schematic sectional view of the crankshaft, the crossed groove structure and the sliding block in FIG. 6;
FIG. 8 shows a schematic structural diagram of a first section of the crankshaft in FIG. 5.
FIG. 9 shows a schematic structural diagram of the first section and an eccentric amount of an eccentric part at the first section in FIG. 8.
FIG. 10 shows a schematic structural diagram of a second section of the crankshaft in FIG. 5.
FIG. 11 shows a schematic structural diagram of the second section and an eccentric amount of an eccentric part at the second section.
FIG. 12 shows a schematic structural diagram of an assembly eccentric amount between a crankshaft and a cylinder sleeve in FIG. 4.
FIG. 13 shows a schematic structural diagram of a cylinder sleeve and a lower flange in FIG. 5 which is at an exploded state.
FIG. 14 shows a schematic structural diagram of an assembly eccentric amount between the cylinder sleeve and the lower flange in FIG. 13.
FIG. 15 shows a schematic structural diagram of a sliding block in FIG. 5 which is in the axial direction of a through hole.
FIG. 16 shows a schematic structural diagram of the cylinder sleeve in FIG. 13.
FIG. 17 shows a schematic structural diagram of a first view angle of the cylinder sleeve in FIG. 16.
FIG. 18 shows a schematic sectional view of the cylinder sleeve in FIG. 16.
FIG. 19 shows a schematic sectional view of a second view angle of the cylinder sleeve in FIG. 16.
FIG. 20 shows a schematic structural diagram of a Y-direction perspective in FIG. 19.
FIG. 21 shows a schematic sectional view of an upper flange and a cylinder sleeve in FIG. 4, and in this diagram, an exhaust path of the pump body assembly is shown.
FIG. 22 shows a schematic structural diagram of a cylinder sleeve and an exhaust cover plate in FIG. 5 which is at an exploded state.
FIG. 23 shows a schematic diagram about a state structure of the compressor in FIG. 3 which is at a point that an air-suction process is started.
FIG. 24 shows a schematic diagram about a state structure of the compressor in FIG. 3 which is in an air-suction process.
FIG. 25 shows a schematic diagram about a state structure of the compressor in FIG. 3 which is at a point that an air-suction process is finished.
FIG. 26 shows a schematic diagram about a state structure of the compressor in FIG. 3 when the compressor is compressing gas.
FIG. 27 shows a schematic diagram about a state structure of the compressor in FIG. 3 which is in an exhaust process.
FIG. 28 shows a schematic diagram about a state structure of the compressor in FIG. 3 which is at the end of an exhaust process.
FIG. 29 shows a schematic exploded structural diagram of a pump body assembly of a compressor according to a second Embodiment of the present invention.
FIG. 30 shows a schematic diagram of an assembly structure of a crankshaft, a crossed groove structure and sliding blocks in FIG. 29.
FIG. 31 shows a schematic diagram of an internal structure of a compressor according to a third embodiment of the present invention.
FIG. 32 shows a schematic structural diagram of a pump body assembly of the compressor in FIG. 31.
FIG. 33 shows a schematic diagram of an assembly structure of a crankshaft, a crossed groove structure and sliding blocks in FIG. 32.
FIG. 34 shows a schematic sectional view of the crankshaft, the crossed groove structure and the sliding blocks in FIG. 33.
FIG. 35 shows a schematic structural diagram of the crankshaft in FIG. 33.
FIG. 36 shows a schematic exploded structural diagram of the crankshaft in FIG. 35.
FIG. 37 shows a schematic structural diagram of a first section and an eccentric amount of an eccentric part at the first section in FIG. 36.
FIG. 38 shows a schematic structural diagram of a second section and an eccentric amount of an eccentric part at the second section in FIG. 36.
FIG. 39 shows a schematic diagram of a mechanism principle of an operation of a compressor in some related technologies.
FIG. 40 shows a schematic diagram of a mechanism principle of an operation of a compressor after being improved in some related technologies.
FIG. 41 shows a schematic diagram about the mechanism principle of the operation of the compressor in FIG. 40, and in this diagram, a force arm for driving a sliding block to rotate by a driving shaft is shown.
FIG. 42 shows a schematic diagram about the mechanism principle of the operation of the compressor in FIG. 40, and in this diagram, a center of a limiting groove structure coincides with a center of an eccentric part.

### DETAILED DESCRIPTIONS OF THE EMBODIMENTS

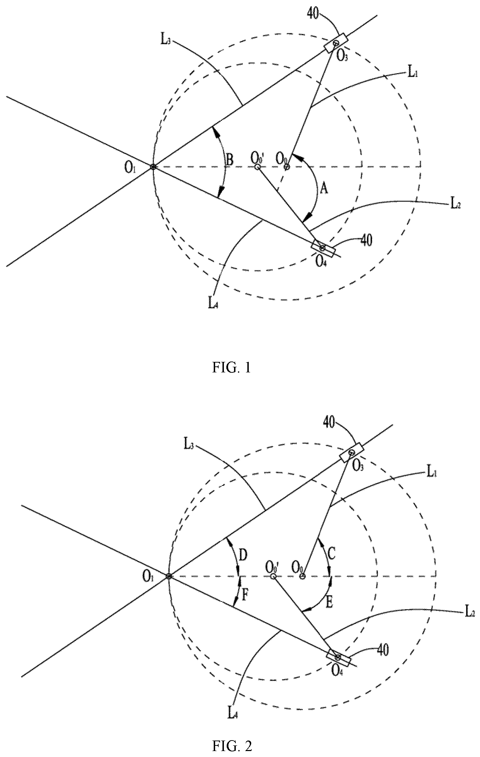

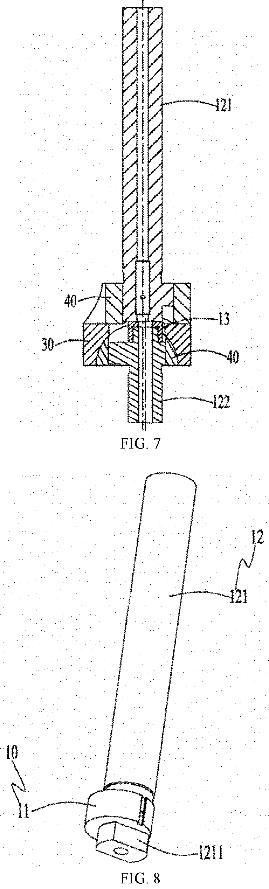

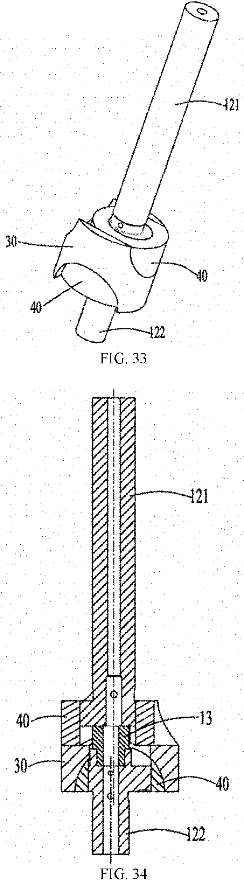

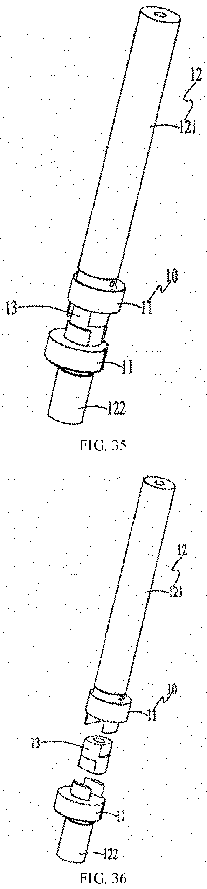

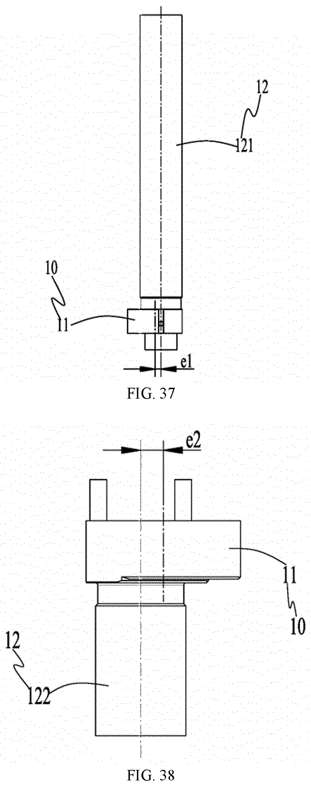

Technical solutions of embodiments of the present invention will be clearly and completely described below with reference to FIGs. 1 to 42. Apparently, the described embodiments are merely a portion but not all of the embodiments of the present invention. Based on the embodiments of the present invention, all other embodiments obtained by a person having ordinary skill in the art without creative efforts shall fall within the protection scope of the present invention.

In description of the present invention, it should be understood that, orientation or positional relationships indicated by terms "center", "longitudinal", "transverse", "front", "rear", "left", "right", "vertical", "horizontal", "top", "bottom", "inner", "outer", and the like, are based on the orientation or positional relationship shown in the drawings, rather than indicating or implying that the indicated device or element must have a particular orientation , constructed and operated in a particular orientation, and therefore cannot be understood as a limitation to the protection scope of the present invention.

Some embodiments of the present invention provide fluid machinery, a heat exchange apparatus, and an operation method for fluid machinery, to solve problems of low energy efficiency and loud noise about fluid machinery, such as a compressor and an expansion machine.

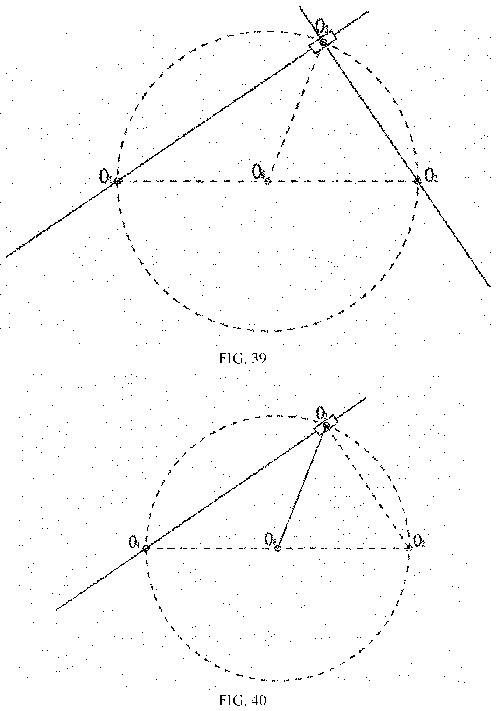

In some related technologies, as shown in FIG. 39, based on a cross-shaped sliding block mechanism, a mechanism principle about an operation of a compressor is provided, that is, a point *O₁* serves as a center of a cylinder, a point *O₂* serves as a center of a driving shaft, and a point *O₃* serves as a center of a sliding block. The cylinder and the driving shaft are eccentrically arranged, where, the center *O₃* of the sliding block performs a circular motion on a circle, and a diameter of the circle is equal to a length of a line segment *O₁O₂.*

In the above-mentioned mechanism principle of the operation, the center *O₁* of the cylinder and the center *O₂* of the driving shaft are two rotation centers of the motion mechanism, and at the same time, a midpoint *O₀* of the line segment *O₁O₂* serves as a virtual center of the center *O₃* of the sliding block, to make the sliding block slide back and forth relative to the cylinder and slide back and forth relative to the driving shaft simultaneously.

Since the midpoint *O₀* of the line segment *O₁O₂* is a virtual center, a balancing system could not be set, resulting in a problem that a high-frequency vibration characteristic of the compressor is deteriorated. Based on the above-mentioned mechanism principle of the operation, as shown in FIG. 40, a motion mechanism taking the *O₀* as a center of the driving shaft is provided, that is, the center *O₁* of the cylinder and the center *O₀* of the driving shaft are taken as two rotation centers of the motion mechanism. The driving shaft is provided with an eccentric part. The sliding block and the eccentric part are arranged coaxially. An assembly eccentric amount of the driving shaft and the cylinder is equal to an eccentric amount of the eccentric part, so that a center *O₃* of the sliding block performs a circular motion with the center *O₀* of the driving shaft as a center of a circle and the *O₁O₂* as a radius.

An operation mechanism is provided correspondingly, including a cylinder, a limiting groove structure, a sliding block and a driving shaft. The limiting groove structure is rotationally arranged in the cylinder, and the cylinder and the limiting groove structure are arranged in coaxially, that is, the center *O₁* of cylinder is also a center of the limiting groove structure. The sliding block slides back and forth relative to the limiting groove structure. The sliding block and an eccentric part of the driving shaft are assembled coaxially. The sliding block performs a circular motion around a shaft body portion of the driving shaft. Specifically, a motion process is as follows: the driving shaft is rotated, to drive the sliding block to perform revolution around the center of the shaft body portion of the driving shaft, and the sliding block performs rotation relative to the eccentric part simultaneously, and the sliding block slides back and forth in a limiting groove of the limiting groove structure, so that the limiting groove structure is pushed to rotate.

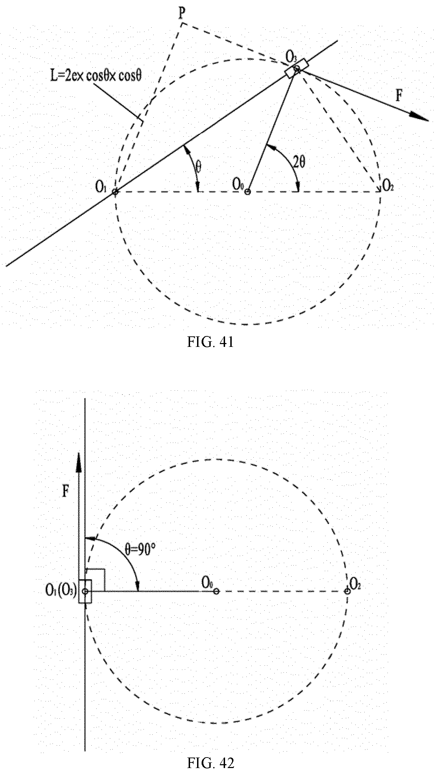

However, as shown in FIG.41, a length of an force arm that the driving shaft drives the sliding block to rotate is L=2*e*×cos*θ*×cos*θ*, where the *e* is an eccentric amount of the eccentric part, and the *θ* is an included angle between the line segment *O₁O₂* and a sliding direction of the sliding block in the limiting groove.

As shown in FIG. 42, when the center *O₁* of the cylinder (that is, the center of the limiting groove structure) and the center of the eccentric part coincide, a resultant force of driving forces of the driving shaft passes through the center of the limiting groove structure. That is, torque applied to the limiting groove structure is zero, so that the limiting groove structure could not be rotated. At this point, the motion mechanism is at a dead point position, so that the sliding block could not be driven to rotate.

Based on this, the present invention provides a mechanism principle including a crossed groove structure having two limiting channels and two sliding blocks. Based on this principle, fluid machinery, such as a compressor and an expansion machine, is constructed. The fluid machinery has characteristics of high energy efficiency and low noise. In the following, taking a compressor as an example, a compressor including a crossed groove structure having two limiting channels and two sliding blocks is introduced in details.

To solve problems of low energy efficiency and loud noise of fluid machinery, such as a compressor and an expansion machine in the related technologies, the present invention provides fluid machinery, a heat exchange apparatus, and an operation method for fluid machinery. The heat exchange apparatus includes the fluid machinery mentioned below, and the fluid machinery is operated by adopting the following operation method.

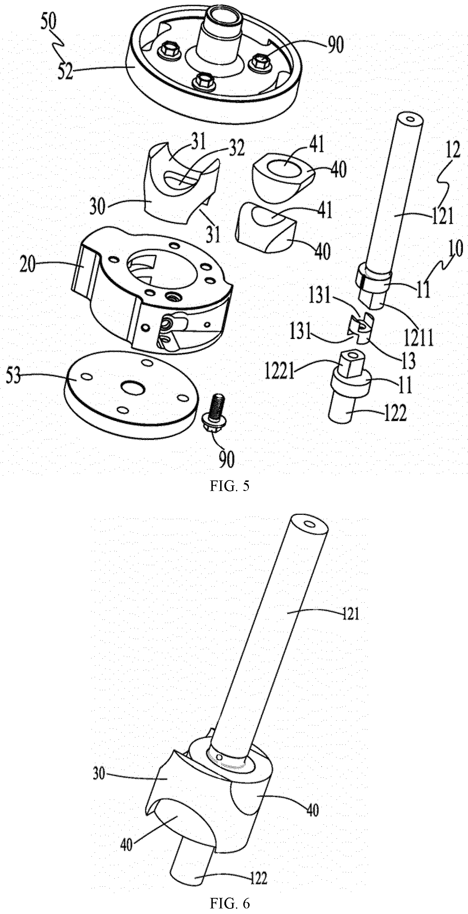

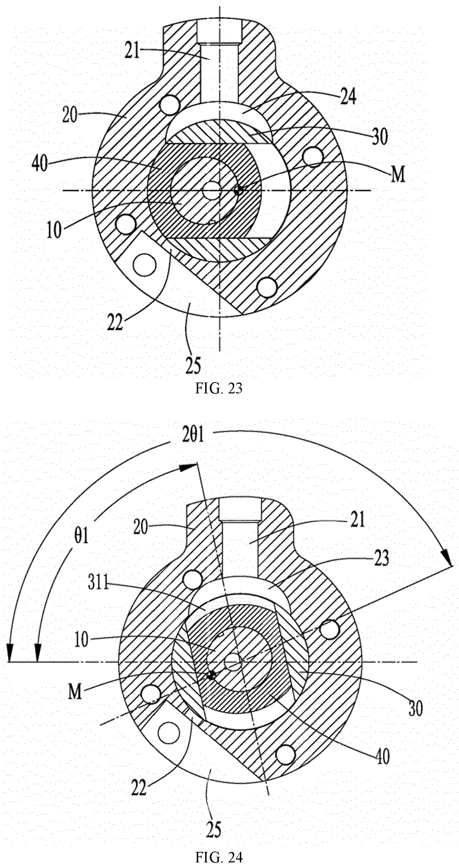

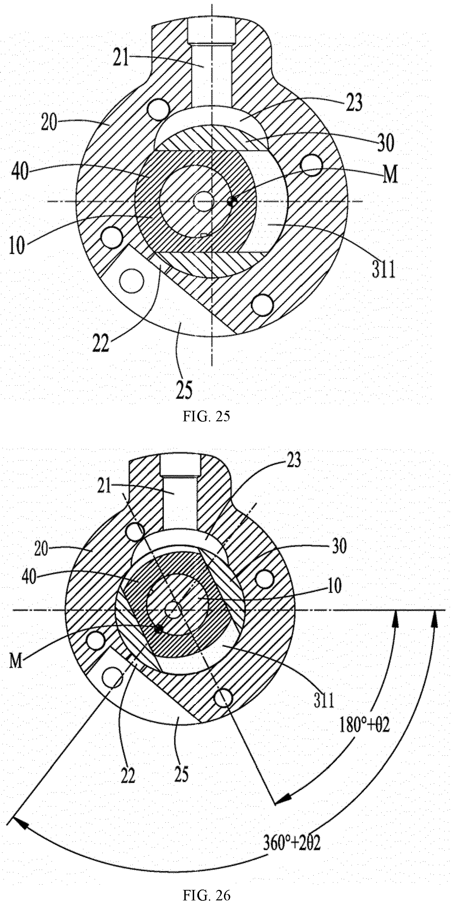

Referring to FIG.5, the fluid machinery of the present invention includes a crankshaft 10, a cylinder sleeve 20, a crossed groove structure 30 and sliding blocks 40. The crankshaft 10 is provided with two eccentric parts 11 along the axial direction of the crankshaft 10. There is a phase difference of a first included angle A between the two eccentric parts 11 (referring to FIG. 1), and eccentric amounts of the two eccentric parts 11 are unequal. The crankshaft 10 and the cylinder sleeve 20 are eccentrically arranged and have a fixed eccentric distance therebetween. The crossed groove structure 30 is rotationally arranged in the cylinder sleeve 20 and is provided with two limiting channels 31 sequentially arranged along the axial direction of the crankshaft 10. Extension directions of the two limiting channels 31 are perpendicular to the axial direction of the crankshaft 10, and there is a phase difference of a second included angle B between the extension directions of the two limiting channels 31 (referring to FIG. 1), where the first included angle A is twice of the second included angle B. The sliding blocks 40 have through holes 41, and the number of the sliding blocks 40 is two. The two eccentric parts 11 correspondingly extends into the two through holes 41 of the two sliding blocks 40. The two sliding blocks 40 are correspondingly arranged in the two limiting channels 31 in a sliding manner, to form a volume-variable cavity 311(referring to FIG. 24 and FIG. 26). The volume-variable cavity 311 is located at a sliding direction of the sliding block 40. The crankshaft 10 is rotated to drive the sliding blocks 40 to slide back and forth in the limiting channel 31 while interacting with the crossed groove structure 30, so that the crossed groove structure 30 and the sliding block 40 is rotated in the cylinder sleeve 20.

The crossed groove structure 30 is set in a structure having two limiting channels 31, and two sliding blocks 40 are correspondingly provided. The two eccentric parts 11 of the crankshaft 10 extends into the two through holes 41 of the two sliding blocks 40 correspondingly. At the same time, the two sliding blocks 40 are correspondingly arranged in the two limiting channels 31 in a sliding manner, so that the volume-variable cavity 311 is formed. Since the first included angle A between the two eccentric parts 11 is twice of the second included angle B between the extension directions of two the limiting channels 31, in the case that one of the two sliding blocks 40 is at a dead point position, that is, driving torque, of the eccentric part 11 corresponding to the sliding block 40 at the dead point position, is zero, so that the sliding block 40 at the dead point position is unable to continue rotating. At this point, driving torque of the sliding block 40 corresponds to the other of the eccentric parts 11 is the maximum value, ensuring that the eccentric part 11 with the maximum driving torque could normally drive the corresponding sliding block 40 to rotate, so that the crossed groove structure 30 is driven to rotate by the sliding block 40, and thus, the sliding block 40 at the dead point position is driven to continue to rotate by the crossed groove structure 30. Consequently, a stable operation of the fluid machinery is achieved, and the dead point position of the motion mechanism is avoided, so that operation reliability of the fluid machinery is improved, and thus, and operation reliability of a heat exchange apparatus is ensured.

In addition, since the fluid machinery provided by the present invention may be stably operated, that is, it is ensured that higher energy efficiency and lower noise of the fluid machinery, such as the compressor and the expansion machine, and the operation reliability of the heat exchange apparatus is ensured.

It should be noted that, in the present invention, neither the first included angle A nor the second included angle B is zero.

As shown in FIG. 1 and FIG. 2, when the above-mentioned fluid machinery is operated, an operation method for the fluid machinery includes: performing, by a first section 121 of the crankshaft 10, rotation, around an axis *O*₀ of the first section 121, and performing, by a second section 122 of the crankshaft 10, rotation, around an axis *O*₀' of the second section 122, where the *O*₀ and the *O*₀' do not coincide; the axis *O*₀ of the first section 121 and an axis *O*₁ of the crossed groove structure 30 being eccentrically arranged and having a fixed eccentric distance therebetween; the axis *O*₀' of the second section 122 and the axis *O*₁ of the crossed groove structure 30 being eccentrically arranged and having a fixed eccentric distance therebetween; taking the axis *O*₀ of the first section 121 as a center of a circle and, performing, by a first sliding block 40, a circular motion, a distance, between a center *O*₃ of the first sliding block 40 and the axis *O*₀ of the first section 121, being equal to the eccentric amount of the eccentric part 11 at the first section 121, and the eccentric amount of the eccentric part 11 at the first section 121, being equal to the eccentric distance between the axis *O*₀ of the crankshaft 10 and the axis *O*₁ of the crossed groove structure 30; the crankshaft 10 being rotated, to drive the first sliding block 40 to perform the circular motion, and the first sliding block 40 interacting with the crossed groove structure 30 and sliding back and forth in the limiting channel 31 of the crossed groove structure 30; taking the axis *O*₀' of the second section 122 as a center of a circle and, performing, by a second sliding block 40, a circular motion, a distance, between a center *O*₄ of the second sliding block 40 and the axis *O*₀' of the second section 122, being equal to the eccentric amount of the eccentric part 11 at the second section 122, and the eccentric amount of the eccentric part 11 at the second section 122, being equal to the eccentric distance between the axis *O*₀' of the second section 122 and the axis *O*₁ of the crossed groove; the crankshaft 10 being rotated, to drive the second sliding block 40 to perform the circular motion, and the second sliding block 40 interacting with the crossed groove structure 30 and sliding back and forth in the limiting channel 31 of the crossed groove structure 30.

The fluid machinery which operated by the operation method described above, constitutes a cross-shaped sliding block mechanism, and this operation method adopts a mechanism principle of a cross-shaped sliding block. The eccentric part 11 of the first section 121 serves as a first connecting rod L₁, the eccentric part 11 of the second section 122 serves as a second connecting rod L₂, and the two limiting channels 31 of the crossed groove structure 30 respectively serve as a third connecting rod L₃ and a fourth connecting rod L₄, where a length of the first connecting rod L₁ and a length of the second connecting rod L₂ are unequal.

As shown in FIG. 1, there is a first included angle A between the first connecting rod L₁ and the second connecting rod L₂, and there is a second included angle B between the third connecting rod L₃ and the fourth connecting rod L₄, where the first included angle A is twice of the second included angle B.

As shown in FIG. 2, a connecting line, among the axis *O*₀ of the first section 121, the axis *O*₀' of the second section 122 and the axis *O*₁ of the crossed groove, is *O*₀*O*₀'*O*₁. There is a third included angle C between the first connecting rod L₁ and the connecting line *O*₀*O*₀'*O*₁, and correspondingly, there is a fourth included angle D between the third connecting rod L₃ and the connecting line *O*₀*O*₀'*O*₁, where the third included angle C is twice of the fourth included angle D. There is a fifth included angle E between the second connecting rod L₂ and the connecting line *O*₀*O*₀'*O*₁, and correspondingly, there is a sixth included angle F between the fourth connecting rod L₄ and the connecting line *O*₀*O*₀'*O*₁, where the fifth included angle E is twice of the sixth included angle F. A sum of the third included angle C and the fifth included angle E is the first included angle A, and a sum of the fourth included angle D and the sixth included angle F is the second included angle B.

In some embodiments, the operation method further includes: an angular velocity of the rotation of the sliding block 40 is equal to an angular velocity of the revolution of the sliding block 40, and an angular velocity of the revolution of the crossed groove structure 30 is equal to the angular velocity of the rotation of the sliding block 40.

To be specific, the axis *O*₀ of the first section 121 is equivalent to a rotation center of the first connecting rod L₁, the axis *O*₀' of the second section 122 is equivalent to a rotation center of the second connecting rod L₂, and the axis *O₁* of the crossed groove structure 30 is equivalent to a rotation center of the third connecting rod L₃ and a fourth connecting rod L₄. The two eccentric parts 11 of the crankshaft 10 respectively serve as the first connecting rod L₁ and second connecting rod L₂. The two limiting channels 31 of the crossed groove structure 30 serve as the third connecting rod L₃ and a fourth connecting rod L₄, respectively. The length of the first connecting rod L₁ is not equal to the length of the second connecting rod L₂. In this way, when the first section 121 is rotated, the eccentric part 11 at the first section 121 drives the corresponding sliding block 40 to perform revolution around the axis *O*₀ of the first section 121, at the same time, the sliding block 40 is able to performs rotation relative to the eccentric part 11, and rotation velocities of the revolution and rotation are the same. The first sliding block 40 and the second sliding block 40 perform reciprocating motion in the two corresponding limiting channels 31, respectively, and drives the crossed groove structure 30 to perform a circular motion, and limited by the two limiting channels 31 of the crossed groove structure 30, moving directions of the two sliding blocks 40 always have a phase difference with the second included angle B. In the case that the eccentric part 11 at the first section 121 is at the dead point position, the eccentric part 11 at the second section 122 has the maximum driving torque. The eccentric part 11 with the maximum driving torque could normally drive the corresponding sliding block 40 to rotate, so that the crossed groove structure 30 is driven to rotate by the sliding block 40, and thus, the sliding block 40 at the dead point position is driven to continue to rotate by the crossed groove structure 30. Consequently, a stable operation of the fluid machinery is achieved, and the dead point position of the motion mechanism is avoided, so that operation reliability of the fluid machinery is improved, and thus, operation reliability of the heat exchange apparatus is ensured. Or, in the case that the eccentric part 11 at the second section 122 is at the dead point position, the eccentric part 11 at the first section 121 has the maximum driving torque. The eccentric part 11 with the maximum driving torque could normally drive the corresponding sliding block 40 to rotate, so that the crossed groove structure 30 is driven to rotate by the sliding block 40, and thus, the sliding block 40 at the dead point position is driven to continue to rotate by the crossed groove structure 30. Consequently, a stable operation of the fluid machinery is achieved, and the dead point position of the motion mechanism is avoided, so that operation reliability of the fluid machinery is improved, and thus operational reliability of the heat exchange apparatus is improved.

It should be noted that, in the present invention, a maximum force arm of the driving torque of the eccentric part 11 is 2*e.*

Under this motion method, running tracks of the two sliding blocks 40 are both circles, where one circle takes the axis *O*₀ of the first section 121 as a center of the circle and the connecting line *O₀O₁* as a radius, and the other circle takes the axis *O₀'* of the second section 122 as a center of the circle and the line *O₀'O₁* as a radius.

It should be noted that, in the present invention, during a rotating process of the crankshaft 10, the crankshaft 10 is rotated two circles, to implement four times of air suction and exhaust process.

To introduce the structure of the fluid machinery in details, three optional embodiments are shown in the followings, so that the operation method of the fluid machinery may be better described by structural features.

### First Embodiment

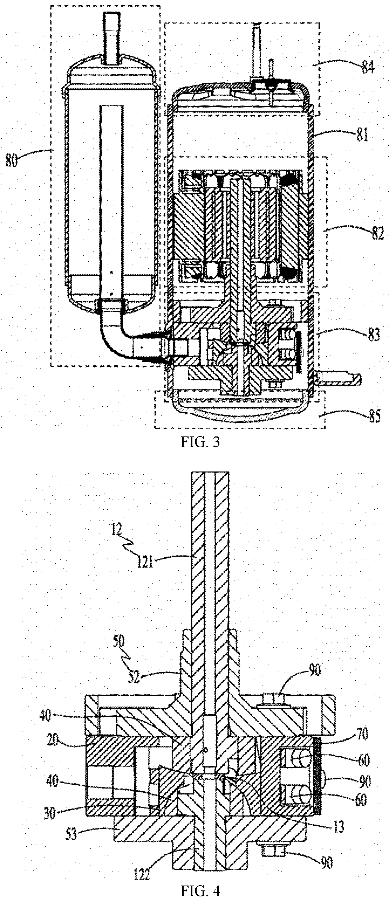

As shown in FIGs. 3 to 28, a shaft body portion 12 of the crankshaft 10 includes a first section 121 and a second section 122 which are connected along the axial direction thereof. The first section 121 and the second section 122 are arranged non-coaxially and are movably connected. The two eccentric parts 11 are respectively arranged at the first section 121 and the second section 122. In this way, the shaft body portion 12 of the crankshaft 10 is configured to be the first section 121 and the second section 122 which are connected along the axial direction thereof, at the same time, the first section 121 and the second section 122 are arranged non-coaxially and are movably connected, it is ensured that the eccentric amount of the eccentric part 11 at the first section 121 is not equal to the eccentric amount of the eccentric part 11 at the second section 122, and rotation reliability of the first section 121 and the second section 122 is also ensured meanwhile.

As shown in FIG. 5, the crankshaft 10 further includes a sliding connection member 13. The first section 121 is movably connected to the second section 122 via the sliding connection member 13. The sliding connection member 13 slides relative to the first section 121 while the first section 121 is rotated. The sliding connection member 13 slides relative to the second section 122 while the second section 122 is rotated. In this way, through the sliding connection member 13, it is ensured that the first section 121 and the second section 122 are arranged non-coaxially, and rotation reliability of the first section 121 and the second section 122 is also ensured.

As shown in FIG. 5, the sliding connection member 13 has two limiting sliding slots 131. Extension directions of the two limiting sliding slots 131 are perpendicular to each other and are both are perpendicular to the axial direction of the crankshaft 10. The first section 121 has a first protrusion structure 1211 at an end part of a side towards the sliding connection member 13. The second section 122 has a second protrusion structure 1221 at an end part of a side towards the sliding connection member 13. The first protrusion structure 1211 and the second protrusion structure 1221 are arranged in the two limiting sliding slots 131 in a sliding manner, respectively. The first section 121 is rotated, to make the first protrusion structure 1211 slide back and forth in the corresponding limiting sliding slot 131 and interact with the sliding connection member 13 simultaneously, so that the sliding connection member 13 is rotated and, drives the second protrusion structure 1221 to slide back and forth in the corresponding limiting sliding slot 131 while driving the second section 122 to rotate. Or, the second section 122 is rotated, to make the second protrusion structure 1221 slide back and forth in the corresponding limiting sliding slot 131 and interact with the sliding connection member 13, so that the sliding connection member 13 is rotated and, drives the first protrusion structure 1211 to slide back and forth in the corresponding limiting sliding slot while driving the first section 121 to rotate. In this way, the connection reliability between the first section 121 and the second section 122 is ensured, and rotation stationarity between the first section 121 and the second section 122 is also ensured.

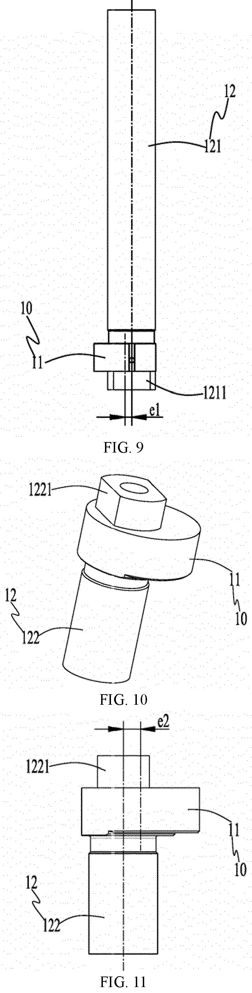

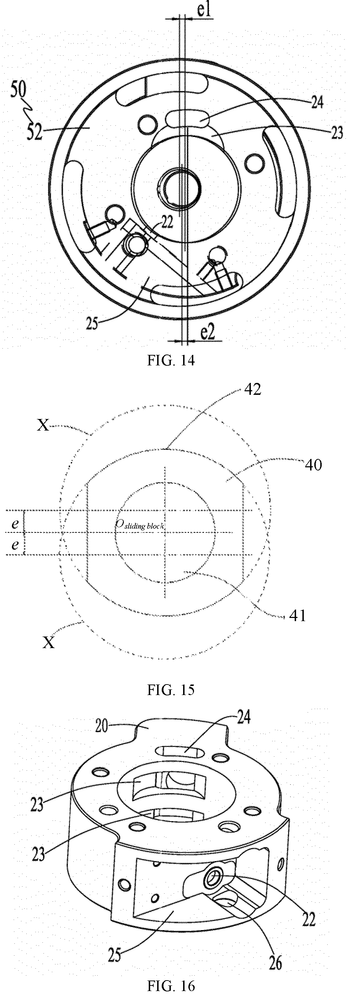

As shown in FIG. 9, FIG. 11, FIG. 12 and FIG. 14, an assembly eccentric amount, between the first section 121 and the cylinder sleeve 20, is equal to the eccentric amount of the eccentric part 11 arranged at the first section 121. An assembly eccentric amount, between the second section 122 and the cylinder sleeve 20, is equal to the eccentric amount of the eccentric parts 11 arranged at the second section 122. In this way, as shown in FIG. 9, the eccentric amount of the eccentric part 11 at the first section 121 is *e₁.* As shown in FIG. 14, the assembly eccentric amount between the first section 121 and the cylinder sleeve 20 is also *e₁.* At the same time, as shown in FIG. 11, the eccentric amount of the eccentric part 11 at the second section 122 is *e*₂, and as shown in FIG. 14, the assembly eccentric amount between the second section 122 and the cylinder sleeve 20 is also *e*₂. In this way, operation reliability of the motion mechanism constructed in FIG. 1 and FIG. 2 is ensured.

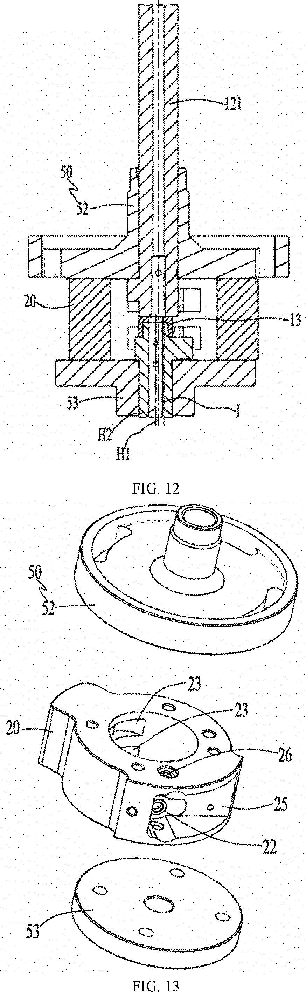

As shown in FIG. 12, a label H1 represents the axis of the first section 121, a label H2 represents the axis of the second section 122, and a label I represents an axis of an inner ring of the cylinder sleeve 20.

As shown in FIG. 5, two ends of the limiting channel 31 penetrates to an outer peripheral surface of the crossed groove structure 30. In this way, difficulty about processing and manufacturing of the crossed groove structure 30 may be reduced.

In some embodiments, the two sliding blocks 40 are concentrically arranged with the two eccentric parts 11 respectively. The sliding blocks 40 perform a circular motion around the axis of the crankshaft 10, and there is a first rotating gap between a hole wall of the through hole 41 and the eccentric part 11, where the first rotating gap ranges from 0.005 mm to 0.05 mm.

In some embodiments, the crossed groove structure 30 and the cylinder sleeve 20 are coaxially arranged. There is a second rotating gap between a peripheral surface of the crossed groove structure 30 and an inner wall surface of the cylinder sleeve 20, and the second rotating gap ranges from 0.005 mm to 0.1 mm.

It should be noted that, in the present invention, the first included angle A ranges from 160 degrees to 200 degrees, and the second included angle B ranges from 80 degrees to 100 degrees, as long as a relationship that the first included angle A is twice of the second included angle B is met.

In some embodiments, the first included angle A is 160 degrees, and the second included angle B is 80 degrees.

In some embodiments, the first included angle A is 165 degrees, and the second included angle B is 82.5 degrees.

In some embodiments, the first included angle A is 170 degrees, and the second included angle B is 85 degrees.

In some embodiments, the first included angle A is 175 degrees, and the second included angle B is 87.5 degrees.

In some embodiments, the first included angle A is 180 degrees, and the second included angle B is 90 degrees.

In some embodiments, the first included angle A is 185 degrees, and the second included angle B is 92.5 degrees.

In some embodiments, the first included angle A is 190 degrees, and the second included angle B is 95 degrees.

In some embodiments, the first included angle A is 195 degrees, and the second included angle B is 97.5 degrees.

As shown in FIG. 4, FIG. 5 and FIG. 12, the fluid machinery further includes a flange 50 arranged at an end of the axial direction of the cylinder sleeve 20. The crankshaft 10 is concentrically arranged with the flange 50. The crossed groove structure 30 and the cylinder sleeve 20 are arranged coaxially. An assembly eccentric amount, between the crankshaft 10 and the crossed groove structure 30, is determined by a relative position relation between the flange 50 and the cylinder sleeve 20, where the flange 50 is fixed at the cylinder sleeve 20 by a fastener 90. A relative position between an axis of the flange 50 and an axis of an inner ring of the cylinder sleeve 20 is controlled by adjusting a center of the flange 50. The relative position, between the axis of the flange 50 and the axis of the inner ring of the cylinder sleeve 20, determines a relative position between an axis of the crankshaft 10 and an axis of the crossed groove structure 30. The essence of adjusting the center of the flange 50 is to make the eccentric amount of the eccentric part 11 is equal to an assembly eccentric amount of the crankshaft 10.

In some embodiments, there is a first assemble gap between the crankshaft 10 and the flange 50, and the first assemble gap ranges from 0.005 mm to 0.05 mm.

In some embodiments, the first assemble gap ranges from 0.01 mm to 0.03 mm.

It should be noted that, in the present invention, the eccentric part 11 has an arc surface, and a central angle of the arc surface is larger than or equal to 180 degrees. In this way, it is ensured that the arc surface of the eccentric part 11 may apply an effective driving force on the sliding block 40, and thereby the motion reliability of the sliding block 40 is ensured.

As shown in FIGs. 4 to 12, the eccentric part 11 is cylindrical.

In some embodiments, a proximal end of the eccentric part 11 is flush with an outer circle of a shaft body portion 12 of the crankshaft 10.

In some embodiments, a proximal end of the eccentric part 11 is protruded from an outer circle of a shaft body portion 12 of the crankshaft 10.

In some embodiments, a proximal end of the eccentric part 11 is provided at an inner side of an outer circle of a shaft body portion 12 of the crankshaft 10.

It should be noted that, in an embodiment of the present invention not shown in the drawings, the sliding block 40 includes a plurality of sub-sliding blocks 40 which are spliced to form the through hole 41.

As shown in FIGs. 4 to 12, the two eccentric parts 11 are arranged at intervals in the axial direction of the crankshaft 10. In this way, during a process of assembling the crankshaft 10, the cylinder sleeve 20 and the two sliding blocks 40, it is ensued that a space distance between the two eccentric parts 11 may provide an assembly space for the cylinder sleeve 20, so that convenience about assembly is ensured.

As shown in FIG. 5, the crossed groove structure 30 has a central hole 32. The two limiting channels 31 communicates with the central hole 32. An aperture of the central hole 32 is larger than a diameter of the shaft body portion 12 of the crankshaft 10. In this way, it is ensued that the crankshaft 10 may smoothly penetrate through the central hole 32.

In some embodiments, the aperture of the central hole 32 is larger than a diameter of the eccentric part 11. In this way, it is ensued that the eccentric part 11 of the crankshaft 10 may penetrate through the central hole 32 smoothly.

As shown in FIG. 15, a projection of the sliding block 40 in the axial direction of the through hole 41 has two relatively parallel straight-line segments and arc segments connecting the ends of the two straight-line segments. The limiting channel 31 has a set of first sliding surfaces arranged opposite to each other and in a sliding contact with the sliding block 40. The sliding block 40 has a second sliding surface matched with the first sliding surface and a pressing surface towards an end of the limiting channel 31. The pressing surface 42 serves as a head of the sliding block 40, the two the second sliding surfaces are connected via the pressing surface, and the pressing surface faces to the volume-variable cavity 311. In this way, a projection of the second sliding surface of the sliding block 40 in the axial direction of the through hole 41 is a straight-line segment, and a projection of the pressing surface 42 of the sliding block 40 in the axial direction of the through hole 41 is an arc segment.

To be specific, the pressing surface 42 is an arc surface, and a distance, between an arc center of the arc surface and a center of the through hole 41, is equal to the eccentric amount of the eccentric part 11. As shown in FIG. 15, a center of the through hole 41 of the sliding block 40 is *O_{sliding block},* and the distances, between the arc centers of the two arc surfaces and the center of the through hole 41 are both *e*, that is, the eccentric amount of the eccentric part 11, and X dotted lines in FIG. 15 represent circles on which the arc centers of the two arc surfaces are located.

In some embodiments, a curvature radius of the arc surface is equal to a radius of an inner circle of the cylinder sleeve 20; or, there is a difference value between a curvature radius of the arc surface and a radius of an inner circle of the cylinder sleeve 20, and the difference value ranges from -0.05 mm to 0.025 mm.

In some embodiments, the difference value ranges from -0.02 mm to 0.02 mm.

In some embodiments, a ratio, between a projection area *S_{sliding block,}* of the pressing surface, in the sliding direction of the sliding block 40 and, an area *Sₑₓₕₐᵤₛ* of a compression exhaust port 22 of the cylinder sleeve 20, is *S_{sliding blook}*/*Sₑₓₕₐᵤₛₜ,* which ranges from 8 to 25.

In some embodiments, the ratio *S_{sliding block}*/*Sₑₓₕₐᵤₛₜ* ranges from 12 to 18.

It should be noted that, the fluid machinery shown in the present invention is a compressor. As shown in FIG. 3, the compressor includes a liquid separator component 80, a housing assembly 81, a motor assembly 82, a pump body assembly 83, an upper cover assembly 84 and a lower cover assembly 85. The liquid separator component 80 is disposed outside the housing assembly 81, the upper cover assembly 84 is assembled at an upper end of the housing assembly 81, the lower cover assembly 85 is assembled at a lower end of the housing assembly 81, and the motor assembly 82 and the pump body assembly 83 are both located in the housing assembly 81. The motor assembly 82 is located above or below the pump body assembly 83. The motor assembly 82 of the compressor includes the crankshaft 10, the cylinder sleeve 20, the crossed groove structure 30, the sliding block 40, the upper flange 52 and the lower flange 53 above-mentioned.

In some embodiments, the above-mentioned components are all connected by means of welding, hot sleeve or cold pressing.

An assembly process of the entire pump body assembly 83 is as follows: the lower flange 53 is fixed on the cylinder sleeve 20; the two sliding blocks 40 are respectively disposed in the two corresponding limiting channels 31, and the first section 121, the second section 122 and the sliding connection member 13 are assembled into the crankshaft 10, then the two eccentric parts 11 of the crankshaft 10 extend respectively into the two through holes 41 of the two corresponding sliding blocks 40, then the assembled crankshaft 10, the crossed groove structure 30, and the two sliding blocks 40 are disposed in the cylinder sleeve 20, one end of the crankshaft 10 is mounted on the lower flange 53, and the other end of the crankshaft 10 penetrates through the upper flange 52. For details, referring to FIG. 4 and FIG. 5.

It should be noted that, in the present embodiment, an enclosed space surrounded by the sliding block 40, the limiting channel 31, the cylinder sleeve 20 and the upper flange 52 (or the lower flange 53) is the volume-variable cavity 311. The pump body assembly 83 has four volume-variable cavities. In the process of the crankshaft 10 is rotated, the crankshaft 10 is rotated two circles, and a single volume-variable cavity 311 completes one time of an air suction and exhaust process. For the compressor, the crankshaft 10 rotates two circles, the sum of four times of the air suction and exhaust process are completed.

As shown in FIGs. 23 to 28, during reciprocating motion of the sliding block 40 in the limiting channel 31, the sliding block 40 is also rotated relative to the cylinder sleeve 20. In FIGs .23 to 25, the volume-variable cavity 311 is enlarged as the sliding block 40 is clockwise rotated from 0 degree to 180 degrees. During a process that the volume-variable cavity 311 is enlarged, the volume-variable cavity 311 communicates with the air-suction cavity 23 of the cylinder sleeve 20. When the sliding block 40 is rotated to 180 degrees, volume of the volume-variable cavity 311 reaches a maximum value. At this point, the volume-variable cavity 311 is detached from the air suction cavity 23, and thereby an air suction and exhaust operation is completed. In FIGs. 26 to 28, during a process that the sliding block 40 continues to rotate in the clockwise direction from 180 degrees to 360 degrees, the volume-variable cavity 311 is decreased, and gas in the volume-variable cavity 311 is compressed by the sliding block 40. When the sliding block 40 is rotated until the volume-variable cavity 311 communicates with the compression exhaust port 22, and a pressure of the gas in the volume-variable cavity 311 reaches an exhaust pressure, an exhaust valve sheet 61 of an exhaust valve assembly 60 is opened to start the exhaust operation until the compression process is finished, and then it enters a next cycle.

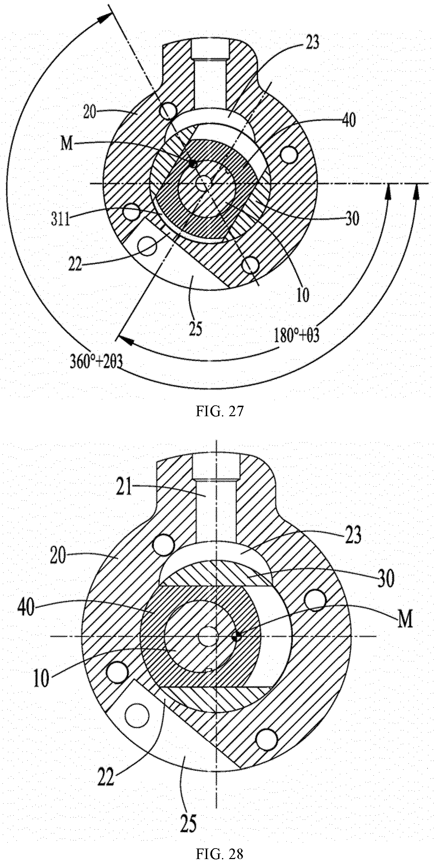

As shown in FIGs. 23 to 28, a point labeled by M serves as a reference point for a relative movement of the sliding block 40 and the crankshaft 10. FIG. 25 shows a process that the sliding block 40 is rotated clockwise from 0 degrees to 180 degrees. A rotation angle of the sliding block 40 is *θ₁,* and correspondingly, a rotation angle of the crankshaft 10 is 2*θ₁*. FIG. 26 shows a process that the sliding block 40 continues to rotate from 180 degrees to 360 degrees along a clockwise direction. The rotation angle of the sliding block 40 is 180° *+ θ₂,* and correspondingly, the rotation angle of the crankshaft 10 is 180°+2*θ*₂. FIG. 27 shows a process that the sliding block 40 continues to rotate from 180 degrees to 360 degrees along the clockwise direction, and the volume-variable cavity 311 is communicated to the compression exhaust port 22. The rotation angle of the sliding block 40 is 180°+ *θ₃,* and correspondingly, the rotation angle of the crankshaft 10 is 360° + 2*θ₃,* that is, the sliding block 40 is rotated one circle, and correspondingly, the crankshaft 10 is rotated two circles, where *θ₁ < θ₂ < θ₃.*

To be specific, and as shown in FIG. 13, FIG. 16 and FIG. 28, the cylinder sleeve 20 has a compression intake port 21 and a compression exhaust port 22. In the case that any of the sliding blocks 40 is at an intake position, the compression intake port 21 communicates with the corresponding volume-variable cavity 311. In the case that any of the sliding blocks 40 is at an exhaust position, the corresponding volume-variable cavity 311 communicates with to the compression exhaust port 22.

As shown in FIG. 13, FIG. 16 and FIG. 28, an inner wall surface of the cylinder sleeve 20 has an air-suction cavity 23, and the air-suction cavity 23 communicates with the compression intake port 21. In this way, it is ensured that the air-suction cavity 23 may store a large amount of gas, so that the gas may be fully sucked into the volume-variable cavity 311, and thus, a sufficient amount of the gas may be sucked into the compressor. When the air suction amount is insufficient, the stored gas may be supplied to the volume-variable cavity 311 in time, and thus the compression efficiency of the compressor is ensured.

In some embodiments, the air suction cavity 23 is formed by hollowing out the inner wall surface of the cylinder sleeve 20 along a radial direction. There may be one air-suction cavity 23, or there may be two air-suction cavities disposed at an upper portion and a lower portion of the inner wall surface of the cylinder sleeve 20, respectively.

To be specific, the air-suction cavity 23 extends a first preset distance around a circumference of the inner wall surface of the cylinder sleeve 20, to form an arc-shaped air-suction cavity 23. In this way, it is ensured that volume of the is large enough, to store a large amount of gas.

As shown in FIG. 13, FIG. 16 and FIG. 18, there are two air-suction cavities 23, and the two air-suction cavities are arranged at intervals along the axial direction of the cylinder sleeve 20. The cylinder sleeve 20 further has an air-suction communicating cavity 24. The two air-suction cavities 23 both communicates with the air-suction communicating cavity 24, and the compression intake port 21 communicates with the air-suction cavity 23 via the air-suction communicating cavity 24. In this way, it is beneficial to increase volume of the air-suction cavity 23, and thus fluctuation of a suction pressure is reduced.

In some embodiments, the air-suction communicating cavity 24 extends a second preset distance along the axial direction of the cylinder sleeve 20. At least one end of the air-suction communicating cavity 24 penetrates through an axial end surface of the cylinder sleeve 20. In this way, the air-suction communicating cavity 24 is conveniently formed at an end surface of the cylinder sleeve 20, and thereby processing convenience of the air-suction communicating cavity 24 is ensured.

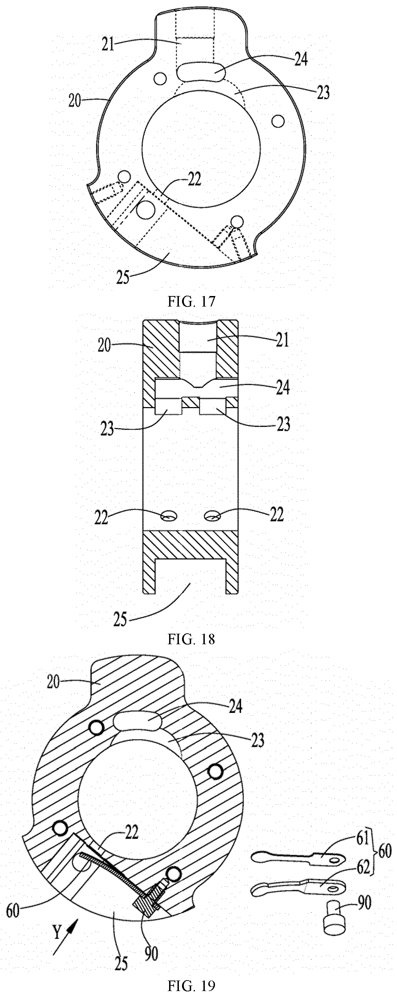

As shown in FIG. 13, FIG. 16 and FIG. 18, the outer wall of the cylinder sleeve 20 is provided with an exhaust cavity 25. The compression exhaust port 22 communicates with the exhaust cavity 25 via the inner wall of the cylinder sleeve 20. As shown in FIG. 19, the fluid machinery further includes an exhaust valve assembly 60 arranged in the exhaust cavity 25 and corresponding to the compression exhaust port 22. In this way, the exhaust cavity 25 is applied to accommodate the exhaust valve assembly, and thereby an occupied space of the exhaust valve assembly 60 is effectively reduced, to make the components to be reasonably arranged, and thus, a space utilization rate of the cylinder sleeve 20 is improved.

As shown in FIG. 18 to FIG. 21, there are two compression exhaust ports 22, and the two compression exhaust ports 22 are arranged at intervals along the axial direction of the cylinder sleeve 20. There are two exhaust valve assemblies 60, and the two exhaust valve assemblies 60 are arranged corresponding to the two compression exhaust ports 22, respectively. In this way, since the two compression exhaust ports 22 are respectively provided with the exhaust valve assembly 60, gas in the volume-variable cavity 311 is effectively prevented from being leaked with a large quantity, so that the compression efficiency of the volume-variable cavity 311 is ensured.

As shown in FIG. 19, the exhaust valve assembly 60 is connected to the cylinder sleeve 20 by a fastener 90. The exhaust valve assembly 60 includes an exhaust valve sheet 61 and a valve plate baffle 62. The exhaust valve sheet 61 is arranged in the exhaust cavity 25 and shields the corresponding compression exhaust port 22. The valve plate baffle 62 is superimposed on the exhaust valve sheet 61. In this way, arrangement of the valve plate baffle 62 effectively prevents the exhaust valve sheet 61 from being excessively opened, thereby exhaust performance of the cylinder sleeve 20 is ensured.

In some embodiments, the fastener 90 is a screw.

As shown in FIG. 13, FIG. 16 and FIG. 21, an axial end surface of the cylinder sleeve 20 is further provided with a communicating hole 26. The communicating hole 26 communicates with the exhaust cavity 25. The fluid machinery further includes a flange 50 provided with an exhaust channel. The communicating hole 26 communicates with the exhaust channel. In this way, exhaust reliability of the cylinder sleeve 20 is ensured.

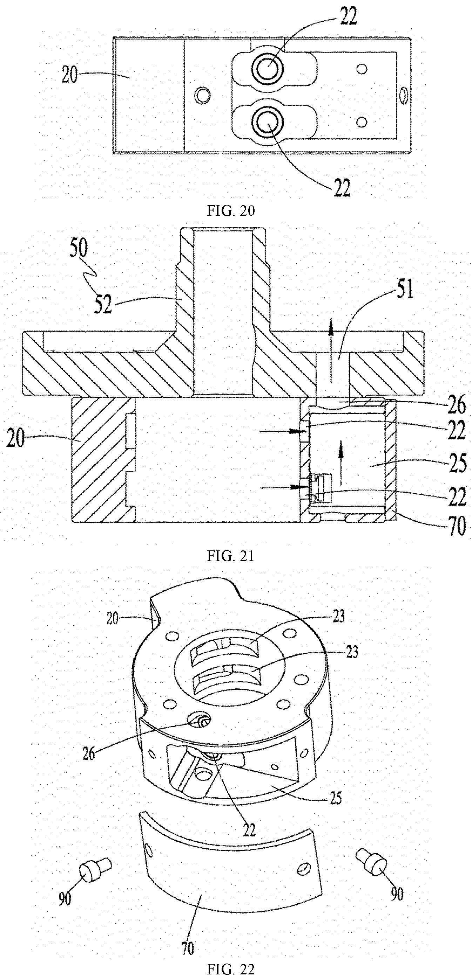

As shown in FIG. 22, the exhaust cavity 25 penetrates through an outer wall surface of the cylinder sleeve 20. The fluid machinery further includes an exhaust cover plate 70 connected to the cylinder sleeve 20 and sealing the exhaust cavity 25. In this way, the exhaust cover plate 70 functions to separate the volume-variable cavity 311 from an external space of the pump body assembly 83.

It should be noted that, in the present invention, when the volume-variable cavity 311 communicates with the compression exhaust port 22 and the pressure of the volume-variable cavity 311 reaches the exhaust pressure, the exhaust valve sheet 61 is opened. Compressed gas enters into the exhaust cavity 25 via the compression exhaust port 22 and passes through the communicating hole 26 at the cylinder sleeve 20. Then the compressed gas is discharged through the exhaust channel 51 and enters the external space (that is, a cavity of the compressor) of the pump body assembly 83, and thereby the exhaust process is finished.

In some embodiments, the exhaust cover plate 70 is fixed on the cylinder sleeve 20 by a fastener 90.

In some embodiments, the fastener 90 is a screw.

In some embodiments, an outer contour of the exhaust cover plate 70 is matched with an outer contour of the exhaust cavity 25.

An operation of the compressor is specifically described below.

As shown in FIG. 3, the motor assembly 82 drives the crankshaft 10 to rotate, so that the two eccentric parts 11 of the crankshaft 10 respectively drive the two corresponding sliding blocks 40 to move. The sliding block 40 performs revolution around the axis of the crankshaft 10, at the same time, the sliding block 40 performs rotation relative to the eccentric part 11, and the sliding block 40 reciprocates along the limiting channel 31 and drives the crossed groove structure 30 to rotate in the cylinder sleeve 20. When the sliding block 40 performs revolution, the sliding block 40 reciprocates along the limiting channel 31 simultaneously, to form a cross-shaped sliding block mechanism.

In other usage scenarios: exchanging positions of the intake port and the exhaust port of this compressor, and the machine serves as an expansion machine. That is, the exhaust port of the compressor serves as an intake port of the expansion machine to inlet high-pressure gas, the high-pressure gas pushes the mechanism to rotate, and after the gas being expanded, the gas is discharged through the compressor suction port (which is an exhaust port of the expansion machine).

When the fluid machinery is an expansion machine, the cylinder sleeve 20 has an expansion intake port and an expansion exhaust port. In the case that any of the sliding blocks 40 is at an intake position, the expansion exhaust port communicates with the corresponding volume-variable cavity 311. In the case that any of the sliding blocks 40 is at an exhaust position, the corresponding volume-variable cavity 311 communicates with the expansion intake port.

In some embodiments, an inner wall surface of the cylinder sleeve 20 has an expansion exhaust cavity 25 communicating with the expansion exhaust port.

In some embodiments, the expansion exhaust cavity 25 extends a first preset distance around a circumference direction of an inner wall surface of the cylinder sleeve 20, to form an arc-shaped expansion exhaust cavity 25, and the expansion exhaust cavity 25 extends from the expansion exhaust port to a side where the expansion intake port is located. An extension direction of the expansion exhaust cavity 25 is the same as a rotation direction of the crossed groove structure 30.

In some embodiments, there are two expansion exhaust cavities 25, and the two expansion exhaust cavities 25 are arranged at intervals along the axial direction of the cylinder sleeve 20. The cylinder sleeve 20 further has an expansion exhaust communicating cavity. The two expansion exhaust cavities 25 both communicates with the expansion exhaust communicating cavity, and the expansion exhaust port communicates with the expansion exhaust cavity 25 via the expansion exhaust communicating cavity.

In some embodiments, the expansion exhaust communicating cavity extends a second preset distance along the axial direction of the cylinder sleeve 20. At least one end of the expansion exhaust communicating cavity penetrates through the axial end surface of the cylinder sleeve 20.

### Second Embodiment

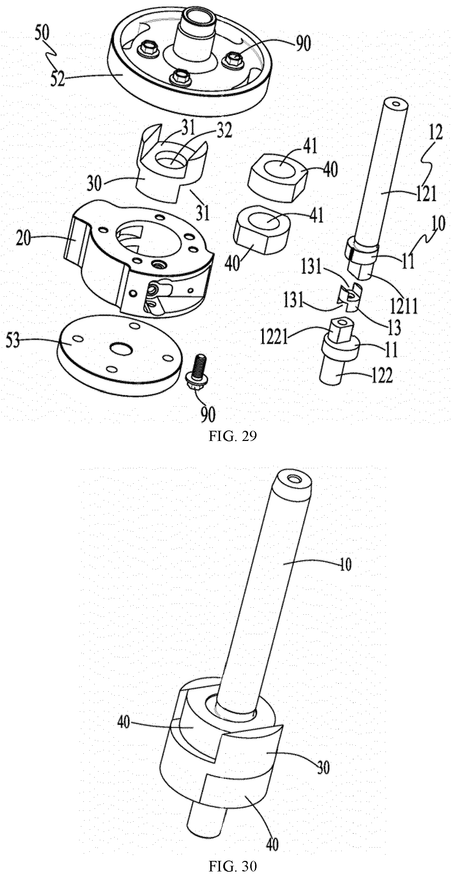

As shown in FIG. 29 and FIG. 30, a different between the present embodiment and the first embodiment is that a section of the limiting channel 31 of the crossed groove structure 30 is a quadrate, and correspondingly, a section in the sliding direction of the sliding block 40 is a quadrate matched with the limiting channel 31.

It should be noted that, the air suction and exhaust mode of the first embodiment is also applicable to the present embodiment, and details are not described herein again.

### Third Embodiment

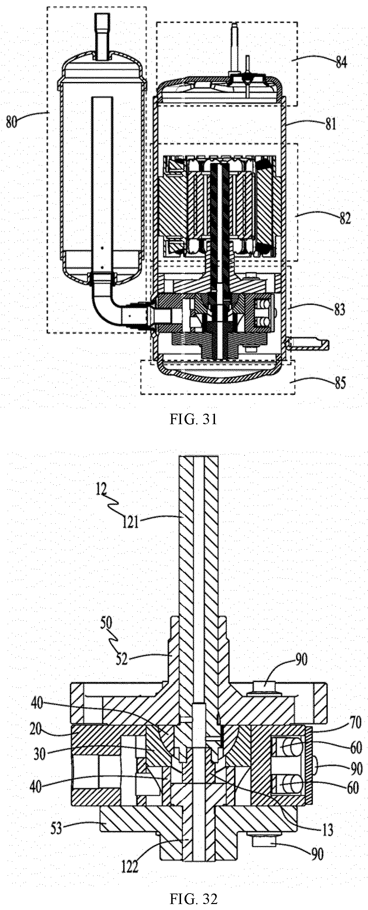

As shown in FIGs. 31 to 38, a different between the present embodiment and the first embodiment is that, the sliding connection member 13 has two limiting protrusions extending towards the first section 121 and the second section 122, respectively. The first section 121 has a first sliding slot structure at an end part of a side towards the sliding connection member 13, and the second section 122 has a second sliding slot structure at an end part of a side towards the sliding connection member 13. The two limiting protrusions are respectively arranged in the first sliding slot structure and the second sliding slot structure slidably, and an extension direction of the first sliding slot structure is perpendicular to an extension direction of the second sliding slot structure. The first section 121 is rotated, to make the corresponding limiting protrusion slide back and forth in the first sliding slot structure and the first sliding slot structure simultaneously interact with the sliding connection member 13, so that the sliding connection member 13 is rotated, and drives the limiting protrusion to slide back and forth in the second sliding slot structure while driving the second section 122 to rotate. Or, the second section 122 is rotated, to make the corresponding limiting protrusion slide back and forth in the second sliding slot structure and the second sliding slot structure simultaneously interact with the sliding connection member 13, so that the sliding connection member 13 is rotated, and drives the limiting protrusion to slide back and forth in the first sliding slot structure while driving the first section 121 to rotate. In this way, connection reliability between the first section 121 and the second section 122 may be ensured, and rotation stability between them may also be ensured meanwhile.

It should be noted that, the air suction and exhaust mode of the first embodiment is also applicable to the present embodiment, and details are not described herein again.

The fluid machinery in the embodiments of the present invention includes a compressor, an expansion machine, and the like.

The heat exchange apparatus in the embodiments of the present invention includes an air conditioner and the like

In the description of the present invention, it should be understood that, terms such as "first", "second", "third" and the like are used to define parts, which are only for the convenience of distinguishing the above components. Unless other additional statement, the above-mentioned terms do not have a special meaning, and therefore cannot be understood as a limitation to the scope of protection of the present invention.

In addition, in the absence of an explicit negative, technical features of one embodiment may be beneficially combined with one or other embodiments.

Finally, it should be noted that, the above-mentioned embodiments are merely used to illustrate technical solutions of the present invention and are not intended to limit them. Although the present invention has been described in details with reference to preferred embodiments, it should be understood by a person having ordinary skill in the art that specific embodiments of the present invention may still be modified, which shall fall within the scope of the appended claims.

## Claims

1. Fluid machinery, comprising:
a crankshaft (10), along an axial direction of thereof provided with two eccentric parts (11), wherein there is a phase difference of a first included angle A between the two eccentric parts (11);
a cylinder sleeve (20), the crankshaft (10) and the cylinder sleeve (20) being eccentrically arranged and having a fixed eccentric distance therebetween;
a crossed groove structure (30), rotationally arranged in the cylinder sleeve (20), the crossed groove structure (30) has two limiting channels (31), the two limiting channels (31) sequentially arranged along the axial direction of the crankshaft (10), extension directions of the two limiting channels (31) being perpendicular to the axial direction of the crankshaft (10), wherein there is a phase difference of a second included angle B between the extension directions of the two limiting channels (31), and the first included angle A is twice of the second included angle B;
two sliding blocks (40), provided with through holes (41), the two eccentric parts (11) correspondingly extends into the two through holes (41) in the two sliding blocks (40), the two sliding blocks (40) being correspondingly arranged in the two limiting channels (31) slidably, to form a volume-variable cavity (311), the volume-variable cavity (311) being located at a sliding direction of the sliding block (40), and the crankshaft (10) being rotated, to drive the sliding blocks (40) to slide back and forth in the limiting channels (31) while interacting with the crossed groove structure (30), so that the crossed groove structure (30) and the sliding block (40) are rotated in the cylinder sleeve (20), **characterized in that**,
eccentric amounts of the two eccentric parts (11) are unequal; and
a shaft body portion (12) of the crankshaft (10) comprises a first section (121) and a second section (122) connected along the axial direction thereof, the first section (121) and the second section (122) are non-coaxially arranged and are movably connected, and the two eccentric parts (11) are respectively arranged at the first section (121) and the second section (122).

2. The fluid machinery according to claim 1, wherein the crankshaft (10) further comprises a sliding connection member (13), the first section (121) is movably connected to the second section (122) via the sliding connection member (13), the sliding connection member (13) slides relative to the first section (121) while the first section (121) is rotated, and the sliding connection member (13) slides relative to the second section (122) while the second section (122) is rotated.

3. The fluid machinery according to claim 2, wherein the sliding connection member (13) has two limiting sliding slots (131), and extension directions of the two limiting sliding slots (131) are perpendicular to each other and are both perpendicular to the axial direction of the crankshaft (10);
the first section (121) has a first protrusion structure (1211) at an end part of a side towards the sliding connection member (13), the second section (122) has a second protrusion structure (1221) at an end part of a side towards the sliding connection member (13), and the first protrusion structure and the second protrusion structure are arranged in the two limiting sliding slots (131) in a sliding manner, respectively;
the first section (121) is rotated, to make the first protrusion structure slide back and forth in the corresponding limiting sliding slot (131) and interact with the sliding connection member (13) simultaneously, so that the sliding connection member (13) is rotated and, drives the second protrusion structure to slide back and forth in the corresponding limiting sliding slot (131) while driving the second section (122) to rotate; or,
the second section (122) is rotated, to make the second protrusion structure slide back and forth in the corresponding limiting sliding slot (131) and interact with the sliding connection member (13) simultaneously, so that the sliding connection member (13) is rotated, and drives the first protrusion structure to slide back and forth in the corresponding limiting sliding slot while driving the first section (121) to rotate.

4. The fluid machinery according to claim 2 or claim 3, wherein the sliding connection member (13) has two limiting protrusions extending towards the first section (121) and the second section (122) respectively;
the first section (121) has a first sliding slot structure at an end part of a side towards the sliding connection member (13), and the second section (122) has a second sliding slot structure at an end part of a side towards the sliding connection member (13), the two limiting protrusions are respectively arranged in the first sliding slot structure and the second sliding slot structure slidably, and an extension direction of the first sliding slot structure is perpendicular to an extension direction of the second sliding slot structure;
the first section (121) is rotated, to make the corresponding limiting protrusion slide back and forth in the first sliding slot structure and the first sliding slot structure simultaneously interact with the sliding connection member (13), so that the sliding connection member (13) is rotated and, drives the limiting protrusion to slide back and forth in the second sliding slot structure while driving the second section (122) to rotate; or,
the second section (122) is rotated, to make the corresponding limiting protrusion slide back and forth in the second sliding slot structure and the second sliding slot structure simultaneously interact with the sliding connection member (13), so that the sliding connection member (13) is rotated and, drives the limiting protrusion to slide back and forth in the first sliding slot structure while driving the first section (121) to rotate.

5. The fluid machinery according to any one of claims 1 to 4, wherein an assembly eccentric amount, between the first section (121) and the cylinder sleeve (20), is equal to the eccentric amount of the eccentric part (11) arranged at the first section (121), and an assembly eccentric amount between the second section (122) and the cylinder sleeve (20), is equal to the eccentric amount of the eccentric part (11) arranged at the second section (122).

6. The fluid machinery according to any one of claims 1 to 5, wherein the two sliding blocks (40) are concentrically arranged with the two eccentric parts (11) respectively, and the sliding blocks (40) perform a circular motion around an axis of the crankshaft (10), there is a first rotating gap between a hole wall of the through hole (41) and the eccentric part (11), and the first rotating gap ranges from 0.005 mm to 0.05 mm; and/or
the crossed groove structure (30) and the cylinder sleeve (20) are coaxially arranged, there is a second rotating gap between a peripheral surface of the crossed groove structure (30) and an inner wall surface of the cylinder sleeve (20), and the second rotating gap ranges from 0.005 mm to 0.1 mm.

7. The fluid machinery according to any one of claims 1 to 6, wherein the first included angle A ranges from 160 degrees to 200 degrees, and the second included angle B ranges from 80 degrees to 100 degrees; and/or
the fluid machinery further comprises a flange (50) arranged at an end of the axial direction of the cylinder sleeve (20), and the crankshaft (10) and the flange (50) are concentrically arranged, wherein there is a first assemble gap between the crankshaft (10) and the flange (50), and the first assemble gap ranges from 0.005 mm to 0.05 mm; preferably, the first assemble gap ranges from 0.01 mm to 0.03 mm.

8. The fluid machinery according to any one of claims 1 to 7, wherein the eccentric part (11) is provided with an arc surface, and a central angle of the arc surface is larger than or equal to 180 degrees.

9. The fluid machinery according to any one of claims 1 to 8, wherein the cylinder sleeve (20) has a compression intake port (21) and a compression exhaust port (22), in the case that any of the sliding blocks (40) is at an intake position, the compression intake port (21) communicates with the corresponding volume-variable cavity (311); and
in the case that any of the sliding blocks (40) is at an exhaust position, the corresponding volume-variable cavity (311) communicates with the compression exhaust port (22);
an inner wall surface of the cylinder sleeve (20) has an air-suction cavity (23) communicating with the compression intake port (21);
the two air-suction cavities (23) are arranged at intervals along the axial direction of the cylinder sleeve (20), the cylinder sleeve (20) further has an air-suction communicating cavity (24), and the two air-suction cavities (23) both communicates with the air-suction communicating cavity (24), and the compression intake port (21) communicates with the air suction cavity (23) via the air-suction communicating cavity (24); and
the air-suction communicating cavity (24) extends a second preset distance along the axial direction of the cylinder sleeve (20), and at least one end of the air-suction communicating cavity (24) penetrates through an axial end surface of the cylinder sleeve (20).

10. The fluid machinery according to claim 9, wherein an outer wall of the cylinder sleeve (20) is provided with an exhaust cavity (25), and the compression exhaust port (22) communicates with the exhaust cavity (25) via an inner wall of the cylinder sleeve (20), the fluid machinery further comprises an exhaust valve assembly (60) arranged in the exhaust cavity (25) and corresponding to the compression intake port (21); and
an axial end surface of the cylinder sleeve (20) is further provided with a communicating hole (26) communicating with the exhaust cavity (25), the fluid machinery further comprises a flange (50) provided with an exhaust channel (51), and the communicating hole (26) communicates with the exhaust channel (51).

11. The fluid machinery according to any one of claims 1 to 10, wherein the cylinder sleeve (20) has an expansion intake port and an expansion exhaust port, in the case that any of the sliding blocks (40) is at an intake position, the expansion exhaust port communicates with the corresponding volume-variable cavity (311); and
in the case that any of the sliding blocks (40) is at an exhaust position, the corresponding volume-variable cavity (311) communicates with the expansion intake port.

12. The fluid machinery according to claim 11, wherein an inner wall surface of the cylinder sleeve (20) has an expansion exhaust cavity communicating with the expansion exhaust port;
there are two expansion exhaust cavities, the two expansion exhaust cavities are arranged at intervals along the axial direction of the cylinder sleeve (20), the cylinder sleeve (20) further has an expansion exhaust communicating cavity, the two expansion exhaust cavities both communicates with the expansion exhaust communicating cavity, and the expansion exhaust port communicates with the expansion exhaust cavity via the expansion exhaust communicating cavity; and
the expansion exhaust communicating cavity extends a second preset distance along the axial direction of the cylinder sleeve (20), and at least one end of the expansion exhaust communicating cavity penetrates through an axial end surface of the cylinder sleeve (20).

13. A heat exchange apparatus, comprising the fluid machinery according to any one of claims 1 to 12.

14. An operation method for the fluid machinery according to any one of claims 1 to 12, comprising:
performing, by a first section (121) of the crankshaft (10), rotation, around the axis *O*₀ of the first section (121), and performing, by a second section (122) of the crankshaft (10), rotation, around the axis *O*₀' of the second section (122), wherein the *O*₀ and the *O*₀' do not coincide;
the axis *O*₀ of the first section (121) and the axis *O*₁ of the crossed groove structure (30) being eccentrically arranged and having a fixed eccentric distance therebetween, and the axis *O*₀' of the second section (122) and the axis *O*₁ of the crossed groove structure (30) eccentrically being arranged and having a fixed eccentric distance therebetween;
taking the axis *O*₀ of the first section (121) as a center of a circle and, performing, by a first sliding block (40), a circular motion, a distance, between a center *O*₃ of the first sliding block (40) and the axis *O*₀ of the first section (121), being equal to the eccentric amount of the eccentric part (11) at the first section (121), the eccentric amount of the eccentric part (11) at the first section (121), being equal to an eccentric distance between the axis *O*₀ of the crankshaft (10) and the axis *O*₁ of the crossed groove structure (30), the crankshaft (10) being rotated, to drive the first sliding block (40) to perform the circular motion, and the first sliding block (40) interacting with the crossed groove structure (30) and sliding back and forth in the limiting channel (31) of the crossed groove structure (30); and
taking the axis *O*₀' of the second section (122) as a center of a circle and, performing, by a second sliding block (40), a circular motion, a distance, between a center *O*₄ of the second sliding block (40) and the axis *O*₀' of the second section (122), being equal to the eccentric amount of the eccentric part (11) at the second section (122), the eccentric amount, of the eccentric part (11) at the second section (122), being equal to an eccentric distance between the axis *O*₀' of the second section (122) and the axis *O*₁ of the crossed groove, the crankshaft (10) being rotated, to drive the second sliding block (40) to perform the circular motion, and the second sliding block (40) interacting with the crossed groove structure (30) and sliding back and forth in the limiting channel (31) of the crossed groove structure (30).

## Patentansprüche

1. Eine Strömungsmaschine, die Folgendes beinhaltet:
eine Kurbelwelle (10) entlang einer axialen Richtung davon, die mit zwei exzentrischen Teilen (11) versehen ist, wobei eine Phasendifferenz eines ersten eingeschlossenen Winkels A zwischen den zwei exzentrischen Teilen (11) besteht;
eine Zylinderhülse (20), wobei die Kurbelwelle (10) und die Zylinderhülse (20) exzentrisch angeordnet sind und einen festen exzentrischen Abstand dazwischen aufweisen;
eine Kreuznutstruktur (30), die drehbar in der Zylinderhülse (20) angeordnet ist, wobei die Kreuznutstruktur (30) zwei Begrenzungskanäle (31) aufweist, wobei die zwei Begrenzungskanäle (31) nacheinander entlang der axialen Richtung der Kurbelwelle (10) angeordnet sind, wobei Erstreckungsrichtungen der zwei Begrenzungskanäle (31) senkrecht zu der axialen Richtung der Kurbelwelle (10) sind, wobei eine Phasendifferenz eines zweiten eingeschlossenen Winkels B zwischen den Erstreckungsrichtungen der zwei Begrenzungskanäle (31) besteht und der erste eingeschlossene Winkel A das Zweifache des zweiten eingeschlossenen Winkels B beträgt;
zwei Gleitblöcke (40), die mit Durchgangslöchern (41) versehen sind, wobei sich die zwei exzentrischen Teile (11) entsprechend in die zwei Durchgangslöcher (41) in den zwei Gleitblöcken (40) erstrecken, wobei die zwei Gleitblöcke (40) entsprechend in den zwei Begrenzungskanälen (31) gleitend angeordnet sind, um einen volumenvariablen Hohlraum (311) zu bilden, wobei sich der volumenvariable Hohlraum (311) in einer Gleitrichtung des Gleitblocks (40) befindet und die Kurbelwelle (10) gedreht wird, um die Gleitblöcke (40) anzutreiben, um in den Begrenzungskanälen (31) vor und zurück zu gleiten, während sie mit der Kreuznutstruktur (30) interagieren, sodass die Kreuznutstruktur (30) und der Gleitblock (40) in der Zylinderhülse (20) gedreht werden,
**dadurch gekennzeichnet, dass**
exzentrische Beträge der zwei exzentrischen Teile (11) ungleich sind; und
eine Wellenkörpersektion (12) der Kurbelwelle (10) einen ersten Abschnitt (121) und
einen zweiten Abschnitt (122) beinhaltet, die entlang der axialen Richtung davon verbunden sind, wobei der erste Abschnitt (121) und der zweite Abschnitt (122) nicht koaxial angeordnet und beweglich verbunden sind und die zwei exzentrischen Teile (11) jeweils an dem ersten Abschnitt (121) und dem zweiten Abschnitt (122) angeordnet sind.

2. Strömungsmaschine gemäß Anspruch 1, wobei die Kurbelwelle (10) ferner ein Gleitverbindungselement (13) beinhaltet, wobei der erste Abschnitt (121) über das Gleitverbindungselement (13) beweglich mit dem zweiten Abschnitt (122) verbunden ist, wobei das Gleitverbindungselement (13) relativ zu dem ersten Abschnitt (121) gleitet, während der erste Abschnitt (121) gedreht wird, und das Gleitverbindungselement (13) relativ zu dem zweiten Abschnitt (122) gleitet, während der zweite Abschnitt (122) gedreht wird.

3. Strömungsmaschine gemäß Anspruch 2, wobei das Gleitverbindungselement (13) zwei Begrenzungsgleitschlitze (131) aufweist und Erstreckungsrichtungen der zwei Begrenzungsgleitschlitze (131) senkrecht zueinander sind und beide senkrecht zu der axialen Richtung der Kurbelwelle (10) sind;
der erste Abschnitt (121) eine erste Vorsprungsstruktur (1211) an einem Endteil einer Seite zu dem Gleitverbindungselement (13) hin aufweist, der zweite Abschnitt (122) eine zweite Vorsprungsstruktur (1221) an einem Endteil einer Seite zu dem Gleitverbindungselement (13) hin aufweist und die erste Vorsprungsstruktur und die zweite Vorsprungsstruktur jeweils gleitend in den zwei Begrenzungsgleitschlitzen (131) angeordnet sind;
der erste Abschnitt (121) gedreht wird, um zu bewirken, dass die erste Vorsprungsstruktur in dem entsprechenden Begrenzungsgleitschlitz (131) vor und zurück gleitet und gleichzeitig mit dem Gleitverbindungselement (13) interagiert, sodass das Gleitverbindungselement (13) gedreht wird und die zweite Vorsprungsstruktur antreibt, um in dem entsprechenden Begrenzungsgleitschlitz (131) vor und zurück zu gleiten, während der zweite Abschnitt (122) zum Drehen angetrieben wird; oder
der zweite Abschnitt (122) gedreht wird, um zu bewirken, dass die zweite Vorsprungsstruktur in dem entsprechenden Begrenzungsgleitschlitz (131) vor und zurück gleitet und gleichzeitig mit dem Gleitverbindungselement (13) interagiert, sodass das Gleitverbindungselement (13) gedreht wird und die erste Vorsprungsstruktur antreibt, um in dem entsprechenden Begrenzungsgleitschlitz vor und zurück zu gleiten, während der erste Abschnitt (121) zum Drehen angetrieben wird.

4. Strömungsmaschine gemäß Anspruch 2 oder Anspruch 3, wobei das Gleitverbindungselement (13) zwei Begrenzungsvorsprünge aufweist, die sich jeweils zu dem ersten Abschnitt (121) und dem zweiten Abschnitt (122) hin erstrecken;
der erste Abschnitt (121) eine erste Gleitschlitzstruktur an einem Endteil einer Seite zu dem Gleitverbindungselement (13) hin aufweist und der zweite Abschnitt (122) eine zweite Gleitschlitzstruktur an einem Endteil einer Seite zu dem Gleitverbindungselement (13) hin aufweist, die zwei Begrenzungsvorsprünge jeweils gleitend in der ersten Gleitschlitzstruktur und der zweiten Gleitschlitzstruktur angeordnet sind und eine Erstreckungsrichtung der ersten Gleitschlitzstruktur senkrecht zu einer Erstreckungsrichtung der zweiten Gleitschlitzstruktur ist;
der erste Abschnitt (121) gedreht wird, um zu bewirken, dass der entsprechende Begrenzungsvorsprung in der ersten Gleitschlitzstruktur vor und zurück gleitet und die erste Gleitschlitzstruktur gleichzeitig mit dem Gleitverbindungselement (13) interagiert, sodass das Gleitverbindungselement (13) gedreht wird und den Begrenzungsvorsprung antreibt, um in der zweiten Gleitschlitzstruktur vor und zurück zu gleiten, während der zweite Abschnitt (122) zum Drehen angetrieben wird; oder
der zweite Abschnitt (122) gedreht wird, um zu bewirken, dass der entsprechende Begrenzungsvorsprung in der zweiten Gleitschlitzstruktur vor und zurück gleitet und die zweite Gleitschlitzstruktur gleichzeitig mit dem Gleitverbindungselement (13) interagiert, sodass das Gleitverbindungselement (13) gedreht wird und den Begrenzungsvorsprung antreibt, um in der ersten Gleitschlitzstruktur vor und zurück zu gleiten, während der erste Abschnitt (121) zum Drehen angetrieben wird.

5. Strömungsmaschine gemäß einem der Ansprüche 1 bis 4, wobei ein Montageexzenterbetrag zwischen dem ersten Abschnitt (121) und der Zylinderhülse (20) gleich dem Exzenterbetrag des exzentrischen Teils (11) ist, der an dem ersten Abschnitt (121) angeordnet ist, und ein Montageexzenterbetrag zwischen dem zweiten Abschnitt (122) und der Zylinderhülse (20) gleich dem Exzenterbetrag des exzentrischen Teils (11) ist, der an dem zweiten Abschnitt (122) angeordnet ist.

6. Strömungsmaschine gemäß einem der Ansprüche 1 bis 5, wobei die zwei Gleitblöcke (40) jeweils konzentrisch mit den zwei exzentrischen Teilen (11) angeordnet sind und die Gleitblöcke (40) eine kreisförmige Bewegung um eine Achse der Kurbelwelle (10) durchführen, ein erster Drehspalt zwischen einer Lochwand des Durchgangslochs (41) und dem exzentrischen Teil (11) besteht und der erste Drehspalt von 0,005 mm bis 0,05 mm reicht; und/oder
die Kreuznutstruktur (30) und die Zylinderhülse (20) koaxial angeordnet sind, ein zweiter Drehspalt zwischen einer Umfangsfläche der Kreuznutstruktur (30) und einer Innenwandfläche der Zylinderhülse (20) besteht und der zweite Drehspalt von 0,005 mm bis 0,1 mm reicht.

7. Strömungsmaschine gemäß einem der Ansprüche 1 bis 6, wobei der erste eingeschlossene Winkel A von 160 Grad bis 200 Grad reicht und der zweite eingeschlossene Winkel B von 80 Grad bis 100 Grad reicht; und/oder die Strömungsmaschine ferner einen Flansch (50) beinhaltet, der an einem Ende der Axialrichtung der Zylinderhülse (20) angeordnet ist, und die Kurbelwelle (10) und der Flansch (50) konzentrisch angeordnet sind, wobei ein erster Montagespalt zwischen der Kurbelwelle (10) und dem Flansch (50) besteht und der erste Montagespalt von 0,005 mm bis 0,05 mm reicht; vorzugsweise der erste Montagespalt von 0,01 mm bis 0,03 mm reicht.

8. Strömungsmaschine gemäß einem der Ansprüche 1 bis 7, wobei der exzentrische Teil (11) mit einer Bogenfläche versehen ist und ein Mittelpunktswinkel der Bogenfläche größer als oder gleich 180 Grad ist.

9. Strömungsmaschine gemäß einem der Ansprüche 1 bis 8, wobei die Zylinderhülse (20) eine Verdichtungseinlassöffnung (21) und eine Verdichtungsauslassöffnung (22) aufweist, in dem Fall, dass sich einer der Gleitblöcke (40) an einer Einlassposition befindet, die Verdichtungseinlassöffnung (21) mit dem entsprechenden volumenvariablen Hohlraum (311) in Verbindung steht; und
in dem Fall, dass sich einer der Gleitblöcke (40) an einer Auslassposition befindet, der entsprechende volumenvariable Hohlraum (311) mit der Verdichtungsauslassöffnung (22) in Verbindung steht;
eine Innenwandfläche der Zylinderhülse (20) einen Luftansaughohlraum (23) aufweist, der mit der Verdichtungseinlassöffnung (21) in Verbindung steht;
die zwei Luftansaughohlräume (23) in Abständen entlang der Axialrichtung der Zylinderhülse (20) angeordnet sind, die Zylinderhülse (20) ferner einen Luftansaugverbindungshohlraum (24) aufweist,
und die zwei Luftansaughohlräume (23) beide mit dem Luftansaugverbindungshohlraum (24) in Verbindung stehen und die Verdichtungseinlassöffnung (21) mit dem Luftansaughohlraum (23) über den Luftansaugverbindungshohlraum (24) in Verbindung steht; und
sich der Luftansaugverbindungshohlraum (24) um einen zweiten voreingestellten Abstand entlang der Axialrichtung der Zylinderhülse (20) erstreckt und mindestens ein Ende des Luftansaugverbindungshohlraums (24) durch eine axiale Endfläche der Zylinderhülse (20) dringt.

10. Strömungsmaschine gemäß Anspruch 9, wobei eine Außenwand der Zylinderhülse (20) mit einem Auslasshohlraum (25) versehen ist und die Verdichtungsauslassöffnung (22) mit dem Auslasshohlraum (25) über eine Innenwand der Zylinderhülse (20) in Verbindung steht, die Strömungsmaschine ferner eine Auslassventilanordnung (60) beinhaltet, die in dem Auslasshohlraum (25) angeordnet ist und der Verdichtungseinlassöffnung (21) entspricht; und
eine axiale Endfläche der Zylinderhülse (20) ferner mit einem Verbindungsloch (26) versehen ist, das mit dem Auslasshohlraum (25) in Verbindung steht, die Strömungsmaschine ferner einen Flansch (50) beinhaltet, der mit einem Auslasskanal (51) versehen ist, und das Verbindungsloch (26) mit dem Auslasskanal (51) in Verbindung steht.

11. Strömungsmaschine gemäß einem der Ansprüche 1 bis 10, wobei die Zylinderhülse (20) eine Expansionseinlassöffnung und eine Expansionsauslassöffnung aufweist, in dem Fall, dass sich einer der Gleitblöcke (40) an einer Einlassposition befindet, die Expansionsauslassöffnung mit dem entsprechenden volumenvariablen Hohlraum (311) in Verbindung steht; und
in dem Fall, dass sich einer der Gleitblöcke (40) an einer Auslassposition befindet, der entsprechende volumenvariable Hohlraum (311) mit der Expansionseinlassöffnung in Verbindung steht.

12. Strömungsmaschine gemäß Anspruch 11, wobei eine Innenwandfläche der Zylinderhülse (20) einen Expansionsauslasshohlraum aufweist, der mit der Expansionsauslassöffnung in Verbindung steht;
zwei Expansionsauslasshohlräume bestehen, die zwei Expansionsauslasshohlräume in Abständen entlang der Axialrichtung der Zylinderhülse (20) angeordnet sind, die Zylinderhülse (20) ferner einen Expansionsauslassverbindungshohlraum aufweist, die zwei Expansionsauslasshohlräume beide mit dem Expansionsauslassverbindungshohlraum in Verbindung stehen und die Expansionsauslassöffnung mit dem Expansionsauslasshohlraum über den Expansionsauslassverbindungshohlraum in Verbindung steht; und
sich der Expansionsauslassverbindungshohlraum um einen zweiten voreingestellten Abstand entlang der Axialrichtung der Zylinderhülse (20) erstreckt und mindestens ein Ende des Expansionsauslassverbindungshohlraums durch eine axiale Endfläche der Zylinderhülse (20) dringt.

13. Eine Wärmetauschervorrichtung, die die Strömungsmaschine gemäß einem der Ansprüche 1 bis 12 beinhaltet.

14. Ein Betriebsverfahren für die Strömungsmaschine gemäß einem der Ansprüche 1 bis 12, das Folgendes beinhaltet:
Durchführen, durch einen ersten Abschnitt (121) der Kurbelwelle (10), einer Drehung um die Achse *O*₀ des ersten Abschnitts (121) und Durchführen, durch einen zweiten Abschnitt (122) der Kurbelwelle (10), einer Drehung um die Achse *O*₀'des zweiten Abschnitts (122), wobei die *O*₀ und die *O*₀' nicht zusammenfallen;
wobei die Achse *O*₀ des ersten Abschnitts (121) und die Achse *O*₁ der Kreuznutstruktur (30) exzentrisch angeordnet sind und einen festen exzentrischen Abstand dazwischen aufweisen und die Achse *O*₀' des zweiten Abschnitts (122) und die Achse *O*₁ der Kreuznutstruktur (30) exzentrisch angeordnet sind und einen festen exzentrischen Abstand dazwischen aufweisen;
Nehmen der Achse *O*₀ des ersten Abschnitts (121) als einen Mittelpunkt eines Kreises und Durchführen, durch einen ersten Gleitblock (40), einer kreisförmigen Bewegung, wobei ein Abstand zwischen einem Mittelpunkt *O*₃ des ersten Gleitblocks (40) und der Achse *O*₀ des ersten Abschnitts (121) gleich dem Exzenterbetrag des exzentrischen Teils (11) an dem ersten Abschnitt (121) ist, wobei der Exzenterbetrag des exzentrischen Teils (11) an dem ersten Abschnitt (121) gleich einem exzentrischen Abstand zwischen der Achse *O*₀ der Kurbelwelle (10) und der Achse *O*₁ der Kreuznutstruktur (30) ist, wobei die Kurbelwelle (10) gedreht wird, um den ersten Gleitblock (40) anzutreiben, um die kreisförmige Bewegung durchzuführen, und der erste Gleitblock (40) mit der Kreuznutstruktur (30) interagiert und in dem Begrenzungskanal (31) der Kreuznutstruktur (30) vor und zurück gleitet; und
Nehmen der Achse *O*₀' des zweiten Abschnitts (122) als einen Mittelpunkt eines Kreises und Durchführen, durch einen zweiten Gleitblock (40), einer kreisförmigen Bewegung, wobei ein Abstand zwischen einem Mittelpunkt *O*₄ des zweiten Gleitblocks (40) und der Achse *O*₀' des zweiten Abschnitts (122) gleich dem Exzenterbetrag des exzentrischen Teils (11) an dem zweiten Abschnitt (122) ist, wobei der Exzenterbetrag des exzentrischen Teils (11) an dem zweiten Abschnitt (122) gleich einem exzentrischen Abstand zwischen der Achse *O*₀' des zweiten Abschnitts (122) und der Achse *O*₁ der Kreuznut ist, wobei die Kurbelwelle (10) gedreht wird, um den zweiten Gleitblock (40) anzutreiben, um die kreisförmige Bewegung durchzuführen, und der zweite Gleitblock (40) mit der Kreuznutstruktur (30) interagiert und in dem Begrenzungskanal (31) der Kreuznutstruktur (30) vor und zurück gleitet.

## Revendications

1. Machine à fluide, comprenant :
un vilebrequin (10), pourvu le long d'une direction axiale de celui-ci de deux parties excentriques (11), dans laquelle il y a une différence de phase d'un premier angle inclus A entre les deux parties excentriques (11) ;
une chemise de cylindre (20), le vilebrequin (10) et la chemise de cylindre (20) étant agencés de manière excentrique et ayant entre eux une distance excentrique fixe ;
une structure à rainures croisées (30), agencée de manière rotative dans la chemise de cylindre (20), la structure à rainures croisées (30) ayant deux canaux de délimitation (31), les deux canaux de délimitation (31) étant agencés séquentiellement le long de la direction axiale du vilebrequin (10), les directions d'extension des deux canaux de délimitation (31) étant perpendiculaires à la direction axiale du vilebrequin (10), dans laquelle il y a une différence de phase d'un deuxième angle inclus B entre les directions d'extension des deux canaux de délimitation (31), et le premier angle inclus A est le double du deuxième angle inclus B ;
deux blocs coulissants (40), pourvus de trous traversants (41), les deux parties excentriques (11) s'étendant de manière correspondante jusque dans les deux trous traversants (41) dans les deux blocs coulissants (40), les deux blocs coulissants (40) étant agencés de manière correspondante dans les deux canaux de délimitation (31) de manière coulissante, afin de former une cavité à volume variable (311), la cavité à volume variable (311) étant située dans une direction de coulissement du bloc coulissant (40), et le vilebrequin (10) étant mis en rotation, afin d'entraîner les blocs coulissants (40) à coulisser vers l'arrière et vers l'avant dans les canaux de délimitation (31) tout en interagissant avec la structure à rainures croisées (30), de sorte que la structure à rainures croisées (30) et le bloc coulissant (40) sont mis en rotation dans la chemise de cylindre (20), **caractérisée en ce que**,
des quantités excentriques des deux parties excentriques (11) sont inégales ; et
une portion corps d'arbre (12) du vilebrequin (10) comprend une première section (121) et une deuxième section (122) raccordées le long de la direction axiale de celui-ci, la première section (121) et la deuxième section (122) sont agencées de manière non coaxiale et sont raccordées de manière mobile, et les deux parties excentriques (11) sont agencées respectivement au niveau de la première section (121) et de la deuxième section (122).

2. La machine à fluide selon la revendication 1, dans laquelle le vilebrequin (10) comprend en outre un organe de raccordement coulissant (13), la première section (121) est raccordée de manière mobile à la deuxième section (122) par l'intermédiaire de l'organe de raccordement coulissant (13), l'organe de raccordement coulissant (13) coulisse par rapport à la première section (121) tandis que la première section (121) est mise en rotation, et l'organe de raccordement coulissant (13) coulisse par rapport à la deuxième section (122) tandis que la deuxième section (122) est mise en rotation.

3. La machine à fluide selon la revendication 2, dans laquelle l'organe de raccordement coulissant (13) a deux fentes de coulissement de délimitation (131), et les directions d'extension des deux fentes de coulissement de délimitation (131) sont perpendiculaires l'une à l'autre et sont toutes les deux perpendiculaires à la direction axiale du vilebrequin (10) ;
la première section (121) a une première structure en saillie (1211) au niveau d'une partie d'extrémité d'un côté vers l'organe de raccordement coulissant (13), la deuxième section (122) a une deuxième structure en saillie (1221) au niveau d'une partie d'extrémité d'un côté vers l'organe de raccordement coulissant (13), et la première structure en saillie et la deuxième structure en saillie sont agencées dans les deux fentes de coulissement de délimitation (131) d'une façon coulissante, respectivement ;
la première section (121) est mise en rotation, afin de faire coulisser la première structure en saillie vers l'arrière et vers l'avant dans la fente de coulissement de délimitation (131) correspondante et de la faire interagir avec l'organe de raccordement coulissant (13) simultanément, de sorte que l'organe de raccordement coulissant (13) est mis en rotation, et entraîne la deuxième structure en saillie à coulisser vers l'arrière et vers l'avant dans la fente de coulissement de délimitation (131) correspondante tout en entraînant la deuxième section (122) en rotation ; ou,
la deuxième section (122) est mise en rotation, afin de faire coulisser la deuxième structure en saillie vers l'arrière et vers l'avant dans la fente de coulissement de délimitation (131) correspondante et de la faire interagir avec l'organe de raccordement coulissant (13) simultanément, de sorte que l'organe de raccordement coulissant (13) est mis en rotation, et entraîne la première structure en saillie à coulisser vers l'arrière et vers l'avant dans la fente de coulissement de délimitation correspondante tout en entraînant la première section (121) en rotation.

4. La machine à fluide selon la revendication 2 ou la revendication 3, dans laquelle l'organe de raccordement coulissant (13) a deux saillies de délimitation s'étendant vers la première section (121) et la deuxième section (122) respectivement ;
la première section (121) a une première structure de fente de coulissement au niveau d'une partie d'extrémité d'un côté vers l'organe de raccordement coulissant (13), et la deuxième section (122) a une deuxième structure de fente de coulissement au niveau d'une partie d'extrémité d'un côté vers l'organe de raccordement coulissant (13), les deux saillies de délimitation sont agencées respectivement dans la première structure de fente de coulissement et la deuxième structure de fente de coulissement de manière coulissante, et une direction d'extension de la première structure de fente de coulissement est perpendiculaire à une direction d'extension de la deuxième structure de fente de coulissement ;
la première section (121) est mise en rotation, afin de faire coulisser la saillie de délimitation correspondante vers l'arrière et vers l'avant dans la première structure de fente de coulissement et de faire interagir simultanément la première structure de fente de coulissement avec l'organe de raccordement coulissant (13), de sorte que l'organe de raccordement coulissant (13) est mis en rotation, et entraîne la saillie de délimitation à coulisser vers l'arrière et vers l'avant dans la deuxième structure de fente de coulissement tout en entraînant la deuxième section (122) en rotation ; ou,
la deuxième section (122) est mise en rotation, afin de faire coulisser la saillie de délimitation correspondante vers l'arrière et vers l'avant dans la deuxième structure de fente de coulissement et de faire interagir simultanément la deuxième structure de fente de coulissement avec l'organe de raccordement coulissant (13), de sorte que l'organe de raccordement coulissant (13) est mis en rotation, et entraîne la saillie de délimitation à coulisser vers l'arrière et vers l'avant dans la première structure de fente de coulissement tout en entraînant la première section (121) en rotation.

5. La machine à fluide selon l'une quelconque des revendications 1 à 4, dans laquelle une quantité excentrique d'assemblage, située entre la première section (121) et la chemise de cylindre (20), est égale à la quantité excentrique de la partie excentrique (11) agencée au niveau de la première section (121), et une quantité excentrique d'assemblage, située entre la deuxième section (122) et la chemise de cylindre (20), est égale à la quantité excentrique de la partie excentrique (11) agencée au niveau de la deuxième section (122).

6. La machine à fluide selon l'une quelconque des revendications 1 à 5, dans laquelle les deux blocs coulissants (40) sont agencés concentriquement avec les deux parties excentriques (11) respectivement, et les blocs coulissants (40) effectuent un mouvement circulaire autour d'un axe du vilebrequin (10), il y a un premier espace rotatif entre une paroi de trou du trou traversant (41) et la partie excentrique (11), et le premier espace rotatif est compris dans la gamme allant de 0,005 mm à 0,05 mm ; et/ou
la structure à rainures croisées (30) et la chemise de cylindre (20) sont agencées de manière coaxiale, il y a un deuxième espace rotatif entre une surface périphérique de la structure à rainures croisées (30) et une surface de paroi interne de la chemise de cylindre (20), et le deuxième espace rotatif est compris dans la gamme allant de 0,005 mm à 0,1 mm.

7. La machine à fluide selon l'une quelconque des revendications 1 à 6, dans laquelle le premier angle inclus A est compris dans la gamme allant de 160 degrés à 200 degrés, et le deuxième angle inclus B est compris dans la gamme allant de 80 degrés à 100 degrés ; et/ou
la machine à fluide comprenant en outre une bride (50) agencée au niveau d'une extrémité de la direction axiale de la chemise de cylindre (20), et le vilebrequin (10) et la bride (50) étant agencés concentriquement, dans laquelle il y a un premier espace d'assemblage entre le vilebrequin (10) et la bride (50), et le premier espace d'assemblage est compris dans la gamme allant de 0,005 mm à 0,05 mm ; de préférence, le premier espace d'assemblage est compris dans la gamme allant de 0,01 mm à 0,03 mm.

8. La machine à fluide selon l'une quelconque des revendications 1 à 7, dans laquelle la partie excentrique (11) est pourvue d'une surface arquée, et un angle central de la surface arquée est supérieur ou égal à 180 degrés.

9. La machine à fluide selon l'une quelconque des revendications 1 à 8, dans laquelle la chemise de cylindre (20) a un orifice d'admission à compression (21) et un orifice d'échappement à compression (22), dans le cas où l'un quelconque des blocs coulissants (40) est au niveau d'une position d'admission, l'orifice d'admission à compression (21) communique avec la cavité à volume variable (311) correspondante ; et
dans le cas où l'un quelconque des blocs coulissants (40) est au niveau d'une position d'échappement, la cavité à volume variable (311) correspondante communique avec l'orifice d'échappement à compression (22) ;
une surface de paroi interne de la chemise de cylindre (20) a une cavité d'aspiration d'air (23) communiquant avec l'orifice d'admission à compression (21) ;
les deux cavités d'aspiration d'air (23) sont agencées à des intervalles le long de la direction axiale de la chemise de cylindre (20), la chemise de cylindre (20) a en outre une cavité de communication d'aspiration d'air (24),
et les deux cavités d'aspiration d'air (23) communiquent toutes les deux avec la cavité de communication d'aspiration d'air (24), et l'orifice d'admission à compression (21) communique avec la cavité d'aspiration d'air (23) par l'intermédiaire de la cavité de communication d'aspiration d'air (24) ; et
la cavité de communication d'aspiration d'air (24) s'étend sur une deuxième distance préétablie le long de la direction axiale de la chemise de cylindre (20), et au moins une extrémité de la cavité de communication d'aspiration d'air (24) pénètre à travers une surface d'extrémité axiale de la chemise de cylindre (20).

10. La machine à fluide selon la revendication 9, dans laquelle une paroi externe de la chemise de cylindre (20) est pourvue d'une cavité d'échappement (25), et l'orifice d'échappement à compression (22) communique avec la cavité d'échappement (25) par l'intermédiaire d'une paroi interne de la chemise de cylindre (20), la machine à fluide comprenant en outre un ensemble soupape d'échappement (60) agencé dans la cavité d'échappement (25) et correspondant à l'orifice d'admission à compression (21) ; et
une surface d'extrémité axiale de la chemise de cylindre (20) est en outre pourvue d'un trou de communication (26) communiquant avec la cavité d'échappement (25), la machine à fluide comprenant en outre une bride (50) pourvue d'un canal d'échappement (51), et le trou de communication (26) communiquant avec le canal d'échappement (51).

11. La machine à fluide selon l'une quelconque des revendications 1 à 10, dans laquelle la chemise de cylindre (20) a un orifice d'admission à détente et un orifice d'échappement à détente, dans le cas où l'un quelconque des blocs coulissants (40) est au niveau d'une position d'admission, l'orifice d'échappement à détente communique avec la cavité à volume variable (311) correspondante ; et
dans le cas où l'un quelconque des blocs coulissants (40) est au niveau d'une position d'échappement, la cavité à volume variable (311) correspondante communique avec l'orifice d'admission à détente.

12. La machine à fluide selon la revendication 11, dans laquelle une surface de paroi interne de la chemise de cylindre (20) a une cavité d'échappement à détente communiquant avec l'orifice d'échappement à détente ;
il y a deux cavités d'échappement à détente, les deux cavités d'échappement à détente sont agencées à des intervalles le long de la direction axiale de la chemise de cylindre (20), la chemise de cylindre (20) a en outre une cavité de communication d'échappement à détente, les deux cavités d'échappement à détente communiquent toutes les deux avec la cavité de communication d'échappement à détente, et l'orifice d'échappement à détente communique avec la cavité d'échappement à détente par l'intermédiaire de la cavité de communication d'échappement à détente ; et
la cavité de communication d'échappement à détente s'étend sur une deuxième distance préétablie le long de la direction axiale de la chemise de cylindre (20), et au moins une extrémité de la cavité de communication d'échappement à détente pénètre à travers une surface d'extrémité axiale de la chemise de cylindre (20).

13. Un appareil d'échange de chaleur, comprenant la machine à fluide selon l'une quelconque des revendications 1 à 12.

14. Un procédé de fonctionnement pour la machine à fluide selon l'une quelconque des revendications 1 à 12, comprenant :
le fait d'effectuer, par une première section (121) du vilebrequin (10), une rotation, autour de l'axe *O*₀ de la première section (121), et le fait d'effectuer, par une deuxième section (122) du vilebrequin (10), une rotation, autour de l'axe *O*₀' de la deuxième section (122), dans lequel le *O*₀ et le *O*₀' ne coïncident pas ;
l'axe *O*₀ de la première section (121) et l'axe *O*₁ de la structure à rainures croisées (30) étant agencés de manière excentrique et ayant entre eux une distance excentrique fixe, et l'axe *O*₀' de la deuxième section (122) et l'axe *O*₁ de la structure à rainures croisées (30) étant agencés de manière excentrique et ayant entre eux une distance excentrique fixe ;
le fait de prendre l'axe *O*₀ de la première section (121) comme centre d'un cercle, et le fait d'effectuer, par un premier bloc coulissant (40), un mouvement circulaire, une distance, entre un centre *O*₃ du premier bloc coulissant (40) et l'axe *O*₀ de la première section (121), étant égale à la quantité excentrique de la partie excentrique (11) au niveau de la première section (121), la quantité excentrique de la partie excentrique (11) au niveau de la première section (121) étant égale à une distance excentrique entre l'axe *O*₀ du vilebrequin (10) et l'axe *O*₁ de la structure à rainures croisées (30), le vilebrequin (10) étant mis en rotation, afin d'entraîner le premier bloc coulissant (40) à effectuer le mouvement circulaire, et le premier bloc coulissant (40) interagissant avec la structure à rainures croisées (30) et coulissant vers l'arrière et vers l'avant dans le canal de délimitation (31) de la structure à rainures croisées (30) ; et
le fait de prendre l'axe *O*₀' de la deuxième section (122) comme centre d'un cercle, et le fait d'effectuer, par un deuxième bloc coulissant (40), un mouvement circulaire, une distance, entre un centre *O*₄ du deuxième bloc coulissant (40) et l'axe *O*₀' de la deuxième section (122), étant égale à la quantité excentrique de la partie excentrique (11) au niveau de la deuxième section (122), la quantité excentrique, de la partie excentrique (11) au niveau de la deuxième section (122), étant égale à une distance excentrique entre l'axe *O*₀' de la deuxième section (122) et l'axe *O*₁ de la rainure croisée, le vilebrequin (10) étant mis en rotation, afin d'entraîner le deuxième bloc coulissant (40) à effectuer le mouvement circulaire, et le deuxième bloc coulissant (40) interagissant avec la structure à rainures croisées (30) et coulissant vers l'arrière et vers l'avant dans le canal de délimitation (31) de la structure à rainures croisées (30).
